# EUROPÄISCHE PATENTANMELDUNG

(11) **EP 2 743 524 A2**
(43) Veröffentlichungstag der Anmeldung: **18.06.2014**
(21) Anmeldenummer: 13196976.8
(22) Anmeldetag: 12.12.2013
(51) Int. Cl.: F16C 29/00

(54) **Justagevorrichtung für Führungen und justierbare Führungsvorrichtung**

(30) Priorität: 14.12.2012 DE 102012112326
(71) Anmelder: Özkara, Ali Osman, 72644 Oberboihingen (DE)
(72) Erfinder: Özkara, Ali Osman, 72644 Oberboihingen (DE)
(74) Vertreter: Rüger, Barthelt & Abel

(57) **Zusammenfassung**

Es ist eine Führungsvorrichtung, insbesondere für Werkzeugmaschinen, geschaffen, die eine an einer Anschlusskonstruktion (6) montierte Führungsschiene (4) und eine Justagevorrichtung (7) aufweist, die zur Einstellung des Verlaufs, insbesondere der Geradheit oder Parallelität, der Führungsschiene (4) eingerichtet ist. Die Justagevorrichtung (7) weist in einer Ausführungsform der Erfindung eine Justageleiste (44, 44') mit einem Montageabschnitt (58) zur Montage an der Anschlusskonstruktion (6) und einem Justageabschnitt (59) zur Justage der Führungsschiene (4) auf, wobei der Justageabschnitt (59) schwenk- oder biegbar mit dem Montageabschnitt (58) verbunden ist und eine mit der Führungsschiene (4) in Anlage stehende Justagefläche (54) aufweist, die ein konvex gekrümmtes Profil aufweist. Eine Einstelleinrichtung (69) dient dazu, den Justageabschnitt (59) in Bezug auf den Montageabschnitt (58) um einen gewünschten Schwenk- bzw. Biegegrad zu verschwenken bzw. zu verbiegen, um eine Breitenmaßveränderung der Justageleiste (44. 44') zur lokalen Verlagerung der Führungsschiene (4) zu erreichen. Damit lassen sich lokale geometrische Fehler der Geradlinigkeit oder Parallelität der Führungsschiene (4) kompensieren.

## Beschreibung

Die vorliegende Erfindung betrifft allgemein eine Justagevorrichtung für eine Führungseinrichtung für eine Bewegung eines bewegbaren Teils, insbesondere für eine Linearführungseinrichtung für Werkzeugmaschinen, sowie eine justierbare Führungsvorrichtung.

Im Werkzeug- und Maschinenbau werden häufig Führungen, insbesondere Linearführungen, als Maschinenkomponente eingesetzt, um die Lage und Richtung einer Bewegung eines Maschinenteils festzulegen und Bewegungen in anderen Freiheitsgraden zu unterbinden. Die Führungen können auch während eines Bearbeitungsprozesses wirksam sein, wenn z.B. ein Bohr-, Dreh-, Fräskopf oder dgl. während des Zerspanungsprozesses gleichzeitig an einem Führungswagen oder -schlitten verfahren wird. Hierzu sind bspw. Schienenführungen für Führungsschlitten oder -wagen mit unterschiedlichen Formen, Profilen und Längen bekannt, die je nach den Anforderungen an den Verfahrweg, die Tragfähigkeit, die erforderliche Lebensdauer, Steifigkeit, erzielbare Führungsgenauigkeit und abhängig von zahlreichen weiteren Faktoren ausgewählt werden.

Müssen längere Führungswege erreicht werden, wie dies z.B. bei größeren Portalfräsmaschinen bspw. für den Modell- und Flugzeugbau der Fall sein kann, bei denen die Führungsbahnlänge 30 oder sogar 40 Meter übersteigen kann, wird die Führungsbahn aus mehreren Führungsschienen zusammengesetzt, die hintereinander verlegt werden. Die Führungsschienen werden häufig an einer Anschlusskonstruktion montiert, die an dem Untergrund oder einem sonstigen geeigneten Träger einer Maschine befestigt wird. Die Führungsschienen wie auch die Anschlusskonstruktion werden in Stücken zum Aufstellungsort geliefert und dort zusammengesetzt, und sie müssen anschließend ausgerichtet und vermessen werden, um eine hohe Linearität bzw. Geradheit und Parallelität der Führungsbahnen zu erhalten.

Um eine störungsfreie Bewegung der Maschinenteile zu ermöglichen, ist auf eine äußerst genaue, fehlerfreie Führung zu achten. Ungenauigkeiten bei Führungen können unerwünschte Kräfte, insbesondere Reibkräfte zur Folge haben, die zu einer Erwärmung, Verformung oder sonstigen Abnutzung an der Führung führen können, die ein Führungsspiel auslösen, Geräusche hervorrufen, die Fress- oder Klemmneigung erhöhen und zu einer irreparablen Beschädigung an der Führung oder sonstigen Maschinenteilen führen können. Eine Ungenauigkeit der Führung wirkt sich auch auf die Bearbeitungsgenauigkeit und die Qualität des Endproduktes aus.

Ungenauigkeiten der Führung können sowohl aus Ungeradheiten, Unlinearitäten oder Parallelitätsfehlern bei der oder den Führungsschienen selbst als auch bei in Bezug auf die Führungsschienen auszurichtenden Antriebskomponenten herrühren. Bspw. müssen Zahnstangen von Ritzel-Zahnstangenantriesbssystemen oder dgl., die eine Bewegung einer an einem Führungsschlitten gelagerten Komponente antreiben, präzise parallel zu der oder den Führungsschienen für den Führungsschlitten ausgerichtet sein, um dessen Bewegungsführung nicht zu beeinträchtigen.

Ein wichtiges Kriterium für die Funktion eines Führungssystems ist auch die Genauigkeit der Anschlusskonstruktion. Je höher die Anforderungen hinsichtlich der Führungsgenauigkeit und Leichtgängigkeit sind, umso mehr ist auch auf die Form-und Lagegenauigkeit der Anlageflächen zu achten. Insofern werden ebenso hohe Anforderungen bezüglich der Ebenheit, Geradheit und Rechtwinkligkeit, die an die Schienenführungen gestellt werden, auch an die Anschlusskonstruktion der Führungen gestellt, weil auch diese maßgeblich die geometrische Genauigkeit der Maschinen beeinflussen.

Die hohen Anforderungen an die Anschlusskonstruktion haben zur Folge, dass die Fertigungs- und Montagekosten stark zunehmen. Die Anschlussflächen der Anschlusskonstruktionen müssen mit hoher Präzision gefertigt werden. Beim Aufbau längerer Führungsbahnen müssen die Anschlusskonstruktionen zusammengesetzt, zueinander ausgerichtet und fest montiert werden. Anschließend werden die Führungsschienen an den Anschlusskonstruktionen befestigt. Auch diese müssen zueinander ausgerichtet werden. Hierzu werden die Führungsbahnen in einem relativ aufwendigen Vorgang, bspw. mittels Lasermesstechnik oder dgl., vermessen. Werden geometrische Fehler, wie Ungeradheiten, Welligkeiten oder Parallelitätsfehler, der Führungsbahnen festgestellt, müssen ggf. die einzelnen Anschlusskonstruktionen und/oder Führungsschienen wieder demontiert und maschinell bearbeitet, z.B. geschliffen oder geschabt, werden, um eine höhere Linearität bzw. Geradheit oder Parallelität der Führungsbahnen zu erhalten. Die bearbeiteten Anschlusskonstruktionen bzw. Führungsschienen werden anschließend wieder montiert und im endgültig montierten Zustand erneut vermessen. Dieser Vorgang muss ggf. mehrmals wiederholt werden, und dies für alle Teilstücke der Anschlusskonstruktionen und Führungsschienen. Der Einrichtvorgang ist enorm aufwändig und kostspielig.

Werden weitere Baugruppen, wie bspw. die Maschinenkomponenten, anschließend angebaut, können die Teile der Führungseinrichtung ggf. aufgrund von hohen Massen entsprechend deformiert werden, so dass die mit hohem Aufwand zuvor ausgerichteten Führungsbahnen nicht mehr gerade sind. Zum Beispiel kann es bei größeren Portalfräsmaschinen nach Lagerung des Portals zu einem lokalen Durchhängen der Führungsbahnen kommen, so dass der Ausrichtvorgang wiederholt werden muss. Wenn der Einfluss der Massen bekannt ist, können bestimmte Deformationen bereits im Vorfeld berücksichtigt werden, indem die Anschlusskonstruktionen entsprechend bearbeitet werden, um nachträgliche geometrische Fehler zu vermeiden.

Eine andere Vorgehensweise besteht darin, die geometrischen Ungenauigkeiten zu ermitteln und passend ausgewählte bzw. bearbeitete Ausgleichseinsätze, wie Keilelemente, Blättchen oder dgl., im Bereich von Tälern der Abweichungsstellen bei- bzw. unterzulegen, um so die Ungenauigkeiten zu kompensieren. Wenngleich dies insbesondere für den Niveauausgleich eine übliche Methode ist, gleichwohl ist hiermit keine genaue und insbesondere keine flexible Einstellung möglich. Die Auswahl und Montage der Ausgleichseinsätze ist mühsam und zeitaufwendig. Außerdem können bei derartigen Bei- bzw. Unterlegelementen lokale Spannungsspitzen und sprunghafte Verformungen an den diskreten Stellen der Enden der Ausgleichseinsätze entstehen, was dort anstatt sanfter Übergänge schadhafte Störungen der Führung hervorruft.

Ausgehend hiervon ist es eine Aufgabe der vorliegenden Erfindung, eine Lösung zu finden, mit der eine einfache Justage von Führungseinrichtungen sowohl bei Erstmontage als auch nach späterer Montage weiterer Komponenten möglich ist, um deren Einflüsse zu kompensieren. Insbesondere ist es eine Aufgabe der vorliegenden Erfindung, eine Justagevorrichtung für eine Führungseinrichtung zu schaffen, die mit einfachen Mitteln und mit geringem Aufwand ermöglicht, eine hohe Genauigkeit des Verlaufs und der Ausrichtung von Führungsbahnen auch im Einsatz über lange Zeit hinweg sicherzustellen.

Eine weitere Aufgabe der vorliegenden Erfindung ist es, eine Führungseinrichtung mit einer Anschlusskonstruktion und einem an dieser montierten Führungskörper zu schaffen, die leicht justiert werden kann, um geometrische Ungenauigkeiten kompensieren zu können. Insbesondere sollte dadurch auch möglich sein, die Anforderungen an die Herstellungs- und Montagegenauigkeit der Anschlusskonstruktion zu reduzieren.

Diese Aufgaben werden mit der Justagevorrichtung mit den Merkmalen des Patentanspruchs 1 und der Führungsvorrichtung nach Anspruch 15 gelöst.

Gemäß einem ersten Aspekt der vorliegenden Erfindung ist eine Justagevorrichtung für eine Führungseinrichtung für eine Bewegung eines bewegbaren Teils, insbesondere für eine Linearführungseinrichtung für Werkzeugmaschinen, geschaffen, die einen Montageabschnitt zur Montage an einer Anschlusskonstruktion und einen Justageabschnitt zur Verbindung mit der Führungseinrichtung aufweist. Der Montageabschnitt und der Justageabschnitt erstrecken sich in einer Längsrichtung der Justagevorrichtung und sind quer zu der Längsrichtung nebeneinander angeordnet. Der Montageabschnitt weist eine erste Anschlussfläche zur Anlage gegen eine Anlagefläche der Anschlusskonstruktion auf. Der Justageabschnitt ist mit dem Montageabschnitt schwenkbar verbunden und weist eine zu der ersten Anschlussfläche entgegengesetzt gerichtete zweite Anschlussfläche auf, die zur Anlage gegen eine Anlagefläche der Führungseinrichtung bestimmt ist und ein gekrümmtes Profil aufweist.

Gemäß der Erfindung ist also der Justageabschnitt in Bezug auf den Montageabschnitt verschwenkbar und die an dem freien Ende des Justageabschnitts angeordnete Anschlussfläche weist ein gekrümmtes Profil auf. Durch relative Verschwenkung des Justageabschnitts können somit unterschiedliche effektive Breiten des Justageabschnitts erhalten werden, um die Führungseinrichtung in der Breitenrichtung unterschiedlich vorspannen bzw. einstellen zu können. Dadurch können geometrische Ungenauigkeiten der Führung, wie Ungeradheiten, Welligkeiten und Parallelitätsfehler, leicht korrigiert werden.

Die erfindungsgemäße Justagevorrichtung eignet sich insbesondere für Linearführungen für geradlinige Bewegungen von Maschinenteilen oder dgl., kann prinzipiell aber auch für krummlinige Führungen eingerichtet sein. Sie kann für Gleit-, Wälzoder auch für Magnetführungen, sowohl für hydrodynamische als auch für hydrostatische oder aerostatische Führungen verwendet werden. Als Führungseinrichtungen können bspw. Führungsschienen unterschiedlicher Formen oder Profile für Flachführungen mit Umgriff, Schwalbenschwanzführungen, Prismenführungen, etc., verwendet werden. Zu der Führungseinrichtung im Sinne der Erfindung gehören auch Zahnstangenelemente eines Ritzel-Zahnstangensystems oder andere längliche Komponenten eines Antriebssystems, die z.B. in Bezug auf Führungsschienen präzise parallel ausgerichtet werden müssen.

In einer vorteilhaften Ausführungsform der Erfindung weist auch die erste Anschlussfläche des Montageabschnitts ein konvex gekrümmtes Profil auf, so dass sie nach außen gewölbt ist. Vorzugsweise ist sie ballig oder bombiert ausgebildet. Dadurch können Anforderungen an die Herstellungsgenauigkeit dieser Anschlussfläche reduziert und der Anschluss an die Anschlusskonstruktion erleichtert werden. Die erste Anschlussfläche muss nicht mit hoher Präzision gerade und rechtwinklig zu einer Grundfläche ausgerichtet sein. Auch die Rechtwinkligkeit der zugehörigen Anlagefläche der Anschlusskonstruktion zu einer Montage- oder Anschraubfläche braucht nicht sehr genau ausgeführt zu sein. Die ballige Form der ersten Anschlussfläche ermöglicht stets eine stabile Linienberührung zwischen dieser und der Anlagefläche der Anschlusskonstruktion und eine hinreichende Abstützung der Justagevorrichtung an dieser. Das Profil der ersten Anschlussfläche ist vorzugsweise ein Kreisbogenprofil oder ein Ellipsenbogenprofil, kann aber auch in sonstiger Weise krummlinear gestaltet sein.

Der Montageabschnitt weist vorzugsweise eine zu der ersten Anschlussfläche im Wesentlichen quer ausgerichtete Grundfläche auf, die als Montagefläche, insbesondere als Auflage- und Anschraubfläche an der Anschlusskonstruktion dienen kann. Sie ist dann mit möglichst hoher Präzision gefertigt. Es sind aber prinzipiell auch unterschiedliche Anordnungen der Justageleiste an einer Anschlusskonstruktion, wie bspw. senkrecht, waagrecht oder sogar schräg, möglich.

In einer Ausführungsform weist der Montageabschnitt eine oder mehrere Befestigungsbohrungen auf, um diesen an der Anschlusskonstruktion befestigen zu können. Vorzugsweise weist der Montageabschnitt mehrere in Reihe angeordnete, mit einer Senkung oder Schulter versehene Befestigungsbohrungen auf, die Befestigungsschrauben aufnehmen, mit denen die Justagevorrichtung an die Anschlusskonstruktion angeschraubt werden kann.

In einer besonders bevorzugten Ausführungsform der Erfindung ist der Justageabschnitt mit dem Montageabschnitt integral ausgebildet. Vorzugsweise ist er auch in einem Stück gemeinsam mit dem Montageabschnitt gefertigt. Z.B. können die beiden Abschnitte in einem Stück, bspw. aus Stahl oder dgl. gegossen, gewalzt oder aus dem Vollen maschinell bearbeitet sein. Es wäre aber auch möglich, die beiden Abschnitte gesondert herzustellen und anschließend aneinander zu befestigen, bspw. miteinander zu verschweißen oder dgl. Prinzipiell könnten die Abschnitte auch über ein Schwenkgelenk miteinander verbunden sein.

In einer Ausführungsform der einstückigen Gestaltung weist die Justagevorrichtung eine ebene Justageleiste mit der ersten und der zweiten Anschlussfläche, die die Schmalseiten der Justageleiste bilden, mit einer Grundfläche, die eine zwischen der ersten und der zweiten Anschlussfläche verlaufende Breitseite bildet, und mit einer weiteren Verbindungsfläche auf, die die erste und die zweite Anschlussfläche miteinander verbindet und die in Dickenrichtung im Abstand, im Wesentlichen parallel zu der Grundfläche verläuft. Die Justageleiste weist eine einfache Form auf, kann leicht und kostengünstig hergestellt werden und lässt sich leicht handhaben.

Um in der einstückigen Ausgestaltung die Verschwenkbarkeit des Justageabschnitts in Bezug auf den Montageabschnitt zu ermöglichen, ist der Justageabschnitt vorzugsweise elastisch biegbar mit dem Montageabschnitt verbunden. Der Schwenk- bzw. Biegepunkt liegt im Wesentlichen an der Verbindungsstelle des Montageabschnitts mit dem Justageabschnitt.

In einer vorteilhaften Ausführungsform ist zur Unterstützung der Biegbarkeit an der Verbindungsstelle zwischen dem Montageabschnitt und dem Justageabschnitt eine Aussparung in Form einer Einkerbung, Nut oder dgl., vorgesehen, die sich ausgehend von der Grundfläche in Dickenrichtung in Richtung auf die Verbindungsfläche erstreckt und in Längsrichtung entlang der gesamten Justageleiste verläuft. Dadurch wird die Dicke an der Verbindungsstelle reduziert, was die Biegbarkeit fördert. Die Aussparung definiert die Soll-Biegestelle, die in etwa in der Mitte des verbleibenden Restmaterials an der Verbindungsstelle liegt. Die Aussparung definiert in dieser Ausführungsform ein der ersten Anschlussfläche gegenüberliegendes erstes Ende des Montageabschnitts und ein der zweiten Anschlussfläche gegenüberliegendes zweites Ende des Justageabschnitts, das an der Soll-Biegestelle mit dem ersten Ende des Montageabschnitts schwenkbar verbunden ist.

Anstatt in der Grundfläche kann die Aussparung auch in der Verbindungsfläche ausgebildet sein und sich auf die Grundfläche zu erstrecken. Jedenfalls wird der Biegepunkt von der Mittelebene zwischen der Grundfläche und der Verbindungsfläche weg verlagert, was in Verbindung mit dem gekrümmten Profil der zweiten Anschlussfläche des Justageabschnitts die Einstellung unterschiedlicher effektiver Breite desselben ermöglicht.

Die Aussparung oder Einkerbung weist vorzugsweise eine Tiefe auf, die wenigstens ein Drittel der Dicke der Justageleiste, gemessen in Dickenrichtung zwischen der Grundfläche und der Verbindungsfläche, beträgt. Vorzugsweise beträgt sie in etwa die Hälfte der Dicke der Justageleiste oder sogar mehr als die Hälfte, um einen relativ dünnen Steg an der Verbindungsstelle zu hinterlassen, der ein relativ leichtes Biegen des von dem Montageabschnitt freikragenden Justageabschnitts ermöglicht. Die Stärke des verbleibenden Stegs sollte aber ausreichen, um eine bleibende Verformung oder gar Beschädigung, wie bspw. eine Rissbildung oder dgl., an der Verbindungsstelle zu vermeiden.

Es ist vorzuziehen, sowohl an der Grundfläche als auch an der Verbindungsfläche jeweils eine Aussparung vorzusehen, um durch Erleichterung einer Stauchung oder Dehnung des Materials an den Aussparungen die dortigen Biegsamkeitseigenschaften in beiden Richtungen zu verbessern. Die Aussparungen sind dann derart angeordnet, dass sie in Dickenrichtung einander gegenüberliegen, wobei sie vorzugsweise unterschiedliche Tiefen haben, um den Soll-Biegepunkt von der Mittelebene zwischen der Grundfläche und der Verbindungsfläche weg zu verlagern. Alternativ können die Aussparungen auch gleich lang sein, wobei dann das krummlinige Profil der zweiten Anschlussfläche bezüglich der Mittelebene unsymmetrisch zu gestalten ist.

In einer alternativen Ausführungsform einer integralen Justageleiste ist diese durch eine dünne flache Leiste im Wesentlichen konstanter Dicke gebildet, die frei von den die Soll-Biegestelle definierenden Aussparungen oder Einkerbungen ist. Die Verschwenkbarkeit des Justageabschnitts in Bezug auf den Montageabschnitt wird hier allein durch dessen elastische Biegbarkeit sichergestellt. Hierzu ist die Justageleiste aus einem hinreichend flexiblen Material, insbesondere elastischem Stahl, und mit hinreichend geringer Dicke ausgebildet, um den Justageabschnitt ausgehend von dem Montageabschnitt zunehmend weiter elastisch verbiegen zu können. Hier entsteht keine punktförmige Biegestelle, sondern eine gekrümmte Biegelinie, ähnlich wie bei der Verformung eines einseitig eingespannten geradlinigen Balkens bei Biegung. Durch Reduktion der Dicke der Justageleiste und Wegfall der Aussparungen und Einkerbungen können der Aufwand hinsichtlich des Materialeinsatzes sowie bei der Fertigung der Justageleiste und die damit verbundenen Kosten deutlich reduziert werden.

Eine besondere Weiterbildung dieser Ausführungsform einer dünnen flachen Justageleiste ist darauf gerichtet, bei der gegebenen geringen Dicke der Justagleiste eine möglichst große Maßveränderung vorzugsweise sowohl im Sinne einer effektiven Breitenvergrößerung als auch im Sinne einer Breitenverkürzung des Justageabschnitts zu ermöglichen. Hierzu weist die ebene Justageleiste einen an die zweite Anschlussfläche angrenzenden Endbereich auf, der in wenigstens ein erstes Segment und ein zweites Segment unterteilt ist, die in Längsrichtung der Leiste hintereinander angeordnet sind. Das erste Segment trägt ein erstes Teilstück der zweiten Anschlussfläche, und das zweite Segment trägt ein zweites Teilstück der zweiten Anschlussfläche. Das erste Teilstück der zweiten Anschlussfläche an dem ersten Segment weist ein anderes gekrümmtes Profil auf als das zweite Teilstück der zweiten Anschlussfläche an dem zweiten Segment. Das Profil des ersten Teilstücks der zweiten Anschlussfläche kann bspw. zur Erzielung einer Maßverkürzung des Justageabschnitts eingerichtet und bestimmt sein, während das Profil des zweiten Teilstücks der zweiten Anschlussfläche bspw. zur Erzielung einer Maßvergrößerung des Justageabschnitts eingerichtet und bestimmt sein kann. Beide Profile bilden ein vorzugsweise stetiges und bevorzugterweise monoton gekrümmtes zusammengesetztes Profil der zweiten Anschlussfläche.

In einer Realisierungsform dieser Weiterbildung ist das erste Segment durch einen flachen, plattenförmigen Fortsatz der ebenen Justageleiste gebildet, dessen freies Ende das erste Teilstück der zweiten Anschlussfläche aufweist, während das zweite Segment durch einen hakenförmigen, von einer Grundfläche der Justageleiste weg gebogenen Fortsatz der Justageleiste gebildet ist, dessen mit der Grundfläche verbundener, umgebogener Flächenabschnitt das zweite Teilstück der zweiten Anschlussfläche aufweist. Um eine unabhängige Verbiegung des ersten und zweiten Segmentes zu unterstützen, sind diese durch einen Spalt voneinander getrennt, der sich ausgehend von der zweiten Anschlussfläche senkrecht zur Längsrichtung der Leiste über im Wesentlichen die Erstreckung des hakenförmigen Fortsatzes hinweg erstreckt.

Die Breite des Justageabschnitts, gemessen zwischen einer Verbindungsstelle des Justageabschnitts mit dem Montageabschnitt, bspw. der oder den Aussparungen, und der zweiten Anschlussfläche, ist vorzugsweise größer als die Breite des Montageabschnitts, gemessen zwischen der ersten Anschlussfläche und der Verbindungsstelle. Die Breite kann insbesondere wenigstens doppelt so groß wie die Breite des Montageabschnitts sein. Dadurch bildet der Justageabschnitt im Einsatz einen langen Hebelarm, was die Verschwenkbarkeit bzw. Biegbarkeit fördert.

In einer bevorzugten Ausführungsform weist die zweite Anschlussfläche, die als Justagefläche an dem freien Ende des Justageabschnitts vorgesehen ist, ein kreisbogensegmentförmiges Profil auf, das gegebenenfalls durch Kombination der Profile der Teilstücke der zweiten Anschlussfläche entsteht. Das Kreisbogensegment kann in Bezug auf die Mittelebene zwischen der Grundfläche und der Verbindungsfläche der Justageleiste spiegelsymmetrisch sein, wenn insbesondere der Schwenkpunkt bzw. Biegepunkt bspw. durch die Aussparung und/oder Einkerbung zu der Mittelebene versetzt festgelegt ist oder wenn die zweite Anschlussfläche in zwei oder mehrere hintereinander liegende Segmente mit unterschiedlichen Profilen aufgeteilt ist.

Der Krümmungsradius, der das Kreisbogensegment beschreibt, ist vorzugsweise größer als die Breite des Justageabschnitts, bspw. größer als der Abstand zwischen dem Schwenkpunkt bzw. Soll-Biegepunkt und der zweiten Anschlussfläche. Dann ist die Krümmung relativ gering, was eine Feinjustage der Führungseinrichtung ermöglicht. Für besonders feine Justage kann der Krümmungsradius sogar größer als die Breite der gesamten Justageleiste sein.

Anstatt eines kreisbogenförmigen Profils kann die zweite Anschlussfläche auch ein ellipsenbogenförmiges Profil bzw. zusammengesetztes Profil oder auch eine andere, ggf. komplizierter gestaltete Bogenkurve beschreiben, die eine beliebige Definition der effektiven Breite der Justageleiste je nach Verschwenk- bzw. Biegegrad des Justageabschnitts ermöglicht.

Zur Einstellung des Schwenkgrads bzw. Biegegrands des Justageabschnitts bzw. dessen effektiver Breite und somit der Lageänderung der Führungseinrichtung oder -bahn ist dem Justageabschnitt eine Einstelleinrichtung zugeordnet. In einer bevorzugten Ausführungsform weist die Einstelleinrichtung Einstellöffnungen auf, die in Dickenrichtung quer durch den Justageabschnitt hindurchführen und Einstellschraubenbolzen aufnehmen. Über die Einstellschraubenbolzen, die sich im Einsatz an der Anschlusskonstruktion abstützen oder in diese eingeschraubt werden, kann der Justageabschnitt dann näher zu der Anschlusskonstruktion hin oder weiter von dieser weg verschwenkt werden, womit die gewünschte Maßveränderung der Justageleiste erreicht wird.

Vorzugsweise gehören zu den Einstellöffnungen wenigstens eine mit einer Schulter versehende Senkbohrung und wenigstens eine senkungsfreie Gewindebohrung. Über die senkungsfreie Gewindebohrung wird insbesondere der Schwenkgrad von der Montagefläche der Anschlusskonstruktion weg eingestellt, wobei die Senkbohrung in Verbindung mit dem zugehörigen Einstellschraubenbolzen den maximalen Schwenkgrad vorgibt. Außerdem kann über die Senkbohrung der Schwenkgrad in Richtung auf die Montagefläche vorgegeben werden.

In einer besonders bevorzugten Ausführungsform ist eine oder sind mehrere Gruppen von Einstellöffnungen vorgesehen, wobei zu jeder Gruppe zwei senkungsfreie Gewindebohrungen und eine Senkbohrung gehören, die in Längsrichtung in einer Linie fluchtend hintereinander angeordnet sind, wobei die Senkbohrung zwischen den senkungsfreien Gewindebohrungen angeordnet ist. Wenn die Einstellschrauben in den senkungsfreien Gewindebohrungen unterschiedlich angezogen werden, können entlang der Längsrichtung lokal unterschiedliche Schwenkgrade und Maßveränderungen des Justageabschnitts eingestellt und somit Welligkeiten der Führung besser kompensiert werden. Es können auch umgekehrt zwei Senkbohrungen und eine senkungsfreie Gewindebohrung oder auch andere Konfigurationen vorgesehen sein. In der Ausführungsform der dünnen flachen Justageleiste kann jedem Segment des Justageabschnitts eine Einstellöffnung mit einer Einstellschraube zugeordnet sein.

In einer vorteilhaften Weiterbildung der erfindungsgemäßen Justageleiste ist der Justageabschnitt in mehrere Teilabschnitte oder Segmente unterteilt, die in Längsrichtung hintereinander angeordnet und durch Querschlitze voneinander getrennt sind. Die Querschlitze erstrecken sich in Querrichtung durch den gesamten Justageabschnitt hindurch, verlaufen also ausgehend von der zweiten Anschlussfläche bis zu der Verbindungsstelle mit dem Montageabschnitt, so dass voneinander unabhängige Justageteilabschnitte geschaffen werden. Jeder Teilabschnitt weist auch eine Gruppe von Einstellöffnungen auf, zu der vorzugsweise eine Gewindesenkbohrung und zwei senkungsfreie Gewindebohrungen gehören (oder umgekehrt), zwischen denen die Senkbohrung in Längsrichtung dazwischenliegend angeordnet ist. In der Ausführungsform der dünnen flachen Justageleiste kann jeder Justageteilabschnitt bspw. zwei erste Segmente jeweils mit zugehöriger senkungsfreier Gewindebohrung und ein zwischen die ersten Segmente eingefügtes zweites Segment mit zugehöriger Gewindesenkbohrung enthalten. Über zugehörige Einstellschrauben können in den einzelnen Justageteilabschnitten je nach Bedarf unterschiedliche Maßveränderungen eingestellt werden, wobei auch dazwischen sanfte, stufenlose, stetige Übergänge geschaffen werden können.

Im Übrigen kann die erfindungsgemäße Justagevorrichtung, insbesondere Justageleiste, mit unterschiedlicher Länge ausgeführt sein. Bevorzugterweise ist die Justagevorrichtung bspw. 250 mm lang, wobei z.B. fünf Segmente mit jeweils 50 mm Länge vorgesehen sein können. Die Länge der Justagevorrichtung kann auch 500 mm, 750 mm oder 1000 mm betragen oder auch eine beliebige sonstige Länge sein. Große Längen werden vorzugsweise durch Aneinanderreihung mehrerer Justagevorrichtungen bzw. -leisten geschaffen.

Gemäß einem weiteren Aspekt der Erfindung ist eine Führungsvorrichtung, insbesondere für Werkzeugmaschinen mit einer Anschlusskonstruktion, einem Führungskörper, einer Justagevorrichtung und einer Arretiervorrichtung geschaffen. Die Anschlusskonstruktion ist zur Befestigung an einem Untergrund, einem Fundament, einem maschinenfesten Träger oder dgl. eingerichtet und weist eine Ausnehmung zur Aufnahme wenigstens des Führungskörpers und der Justagevorrichtung auf. Die Ausnehmung ist durch eine Montagefläche und eine zu der Montagefläche quer ausgerichtete Anlagefläche definiert. Der Führungskörper ist in der Ausnehmung der Anschlusskonstruktion angeordnet und definiert eine Führungsbahn zur Führung einer Bewegung eines bewegbaren Teils, z.B. eines Maschinenteils. Der Führungskörper kann z.B. eine Führungsschiene sein. Der Führungskörper weist eine Basisfläche, die an der Montagefläche der Anschlusskonstruktion montiert ist, und eine hierzu quer, insbesondere senkrecht, ausgerichtete Anlagefläche auf. Die Justagevorrichtung ist ebenfalls in der Ausnehmung der Anschlusskonstruktion angeordnet und in der oben näher beschriebenen Weise zur Einstellung der Lage des Führungskörpers eingerichtet. Die Justagevorrichtung kann bspw. die einstückige Justageleiste mit dem Montageabschnitt und dem integralen Justageabschnitt in der Ausführungsform mit einer Aussparung und/oder Einkerbung zur Schaffung einer Soll-Biegestelle oder in der aussparungsfreien Ausführungsform der dünnen flachen Leiste sein. Die Justagevorrichtung ist an der Montagefläche der Anschlusskonstruktion derart montiert, dass ihre erste Anschlussfläche an der Anlagefläche der Anschlusskonstruktion anliegt und ihre zweite Anschlussfläche mit der Anlagefläche des Führungskörpers in Anlage steht. Die Arretiervorrichtung ist dazu eingerichtet, die einstellbare Relativlage des Führungskörpers festzustellen.

Mittels der Justagevorrichtung kann die relative Lage des Führungskörpers in Bezug auf die Justagevorrichtung und die Anschlusskonstruktion vorgegeben werden, und diese wird dann mittels der Arretiervorrichtung fixiert. Die jeweilige genaue Position, Geradheit oder Linearität der Führungsbahn kann mit relativ geringem Aufwand und einfachen Mitteln sichergestellt werden, und es können Herstellungstoleranzen an Anschlussflächen der Anschlusskonstruktion vergrößert werden, ohne die Genauigkeit der Führung zu beeinträchtigen. Hinsichtlich der möglichen Ausgestaltungen der Justagevorrichtung wird zur Vermeidung von Wiederholungen auf die vorstehenden Ausführungen verwiesen. Im Übrigen kommen die Vorteile der Justagevorrichtung als solche, wie bspw. die einfache Handhabung, aufwandsarme und kostengünstige Ausgestaltung, etc., auch der Führungsvorrichtung im Ganzen zugute.

In einer bevorzugten Ausführungsform der Erfindung weist die Anschlusskonstruktion in der Montagefläche eine Längsnut auf, die sich in Längsrichtung der Führungsvorrichtung dem Justageabschnitt gegenüberliegend erstreckt und einen gegenüber der Montagefläche vertieft angeordneten Nutgrund aufweist. Die Längsnut schafft einen Freiraum, um den Justageabschnitt sowohl von der Montagefläche der Anschlusskonstruktion weg als auch zu dieser hin um ein gewünschtes Maß verschwenken zu können. Alternativ oder zusätzlich zu der Längsnut kann auch die Grundfläche des Justageabschnitts gegenüber derjenigen des Montageabschnitts zurückversetzt sein.

Der Führungskörper ist vorzugsweise in Form einer profilierten Führungsschiene, insbesondere zur Linearführung der Bewegung eines bspw. ein Maschinen- oder Messsystemteil tragenden Führungswagens oder -schlittens, ausgebildet. Der Führungswagen kann über Wälzkörper oder auch gleitend an der Führungsschiene gelagert sein.

Der Führungskörper kann auch durch eine in Bezug auf eine Linearführung auszurichtende längliche Antriebskomponente gebildet sein. Dies kann insbesondere eine Zahnstange eines Ritzel-Zahnstangenantriebssystems sein, die präzise parallel bspw. zu einer Führungsschiene auszurichten ist. Die Führungsbahn ist dann bspw. die gezahnte Fläche der Zahnstange, die die relative Bewegung zwischen dem Ritzel und der Zahnstange vorgibt. Die Zahnstange kann mit der Führungsschiene an einer gemeinsamen oder einer gesonderten Anschlusskonstruktion angeordnet sein.

Die Arretiervorrichtung kann in einer einfachen Ausführungsform eine Klemmleiste aufweisen, die an der Anschlusskonstruktion derart befestigt, vorzugsweise angeschraubt werden kann, dass sie den Führungskörper gegen die zweite Anschlussfläche der Justagevorrichtung und die gesamte Anordnung gegen die erste Anschlussfläche der Anschlusskonstruktion andrückt. Dadurch wird die zuvor eingestellte Relativlage des Führungskörpers fixiert.

Weitere vorteilhafte Einzelheiten von Ausführungsformen der Erfindung ergeben sich aus Unteransprüchen, der Zeichnung sowie der dazugehörigen Beschreibung. In der Zeichnung sind Ausführungsbeispiele des Gegenstands der Erfindung lediglich zu Veranschaulichungszwecken und nicht zur Beschränkung des Umfangs der Erfindung dargestellt. Es zeigen:
Fig. 1 ein Führungssystem mit einer an einer Anschlusskonstruktion montierten Führungsvorrichtung mit einer Justagevorrichtung gemäß einer Ausführungsform der vorliegenden Erfindung, in vereinfachter perspektivischer Darstellung;
Fig. 2 einen Ausschnitt aus Fig. 1 in vergrößerter, schematisierter, perspektivischer Schnittdarstellung;
Fig. 3 eine Ausführungsform einer Justageleiste der Justagevorrichtung nach Fig. 1 und 2 in schematisierter perspektivischer Darstellung;
Fig. 4 eine Draufsicht von vorne auf die Justageleiste nach Fig. 3;
Fig. 5 eine Detailansicht, die die Schnittstelle zwischen der erfindungsgemäßen Justageleiste und einer Führungsschiene veranschaulicht, in vergrößerter, vereinfachter, ausschnittsweiser Vorderansicht;
Fig. 6 eine Längsschnittdarstellung durch die an der Anschlusskonstruktion montierte Justageleiste, in einer ausschnittsweisen, vereinfachten Darstellung, in verkleinertem Maßstab;
Figuren 7a, 7b Detaildarstellungen der Schnittstelle zwischen der erfindungsgemäßen Justageleiste und einer Führungsschiene zur Veranschaulichung des Wirkprinzips bei einer Verschwenkung der Justageleiste nach oben, in ausschnittsweiser, vereinfachter Vorderansicht;
Figuren 8a, 8b Detaildarstellungen der Schnittstelle zwischen der erfindungsgemäßen Justageleiste und einer Führungsschiene zur Veranschaulichung des Wirkprinzips bei einer Verschwenkung der Justageleiste nach unten, in ausschnittsweiser, vereinfachter Vorderansicht;
Fig. 9 ein Führungssystem mit einer Justagevorrichtung gemäß einer weiteren Ausführungsform der vorliegenden Erfindung, in vereinfachter perspektivischer Darstellung ähnlich Fig. 1;
Fig. 10 einen Ausschnitt aus Fig. 9 unter detaillierterer Darstellung der Justageleiste der Justagevorrichtung, in vergrößerter, schematisierter Perspektivansicht;
Fig. 11 eine Detailansicht ähnlich Fig. 10, jedoch geschnitten quer durch die Justageleiste und mit anderer Blickrichtung;
Fig. 12 eine Detailansicht ähnlich Fig. 11, geschnitten entlang einer anderen Stelle der Justageleiste;
Fig. 13 eine Detailansicht, die die Schnittstelle zwischen einer Führungsschiene und der Justageleiste gemäß der weiteren Ausführungsform der Erfindung veranschaulicht, in vergrößerter, vereinfachter, ausschnittsweiser Vorderansicht; und
Figuren 14a, 14b Detaildarstellungen der Schnittstelle zwischen der Justageleiste nach Fig. 9 bis 13 und einer Führungsschiene zur Veranschaulichung des Wirkprinzips bei einer Verschwenkung der Justageleiste nach oben bzw. unten, in ausschnittsweiser vereinfachter Vorderansicht.

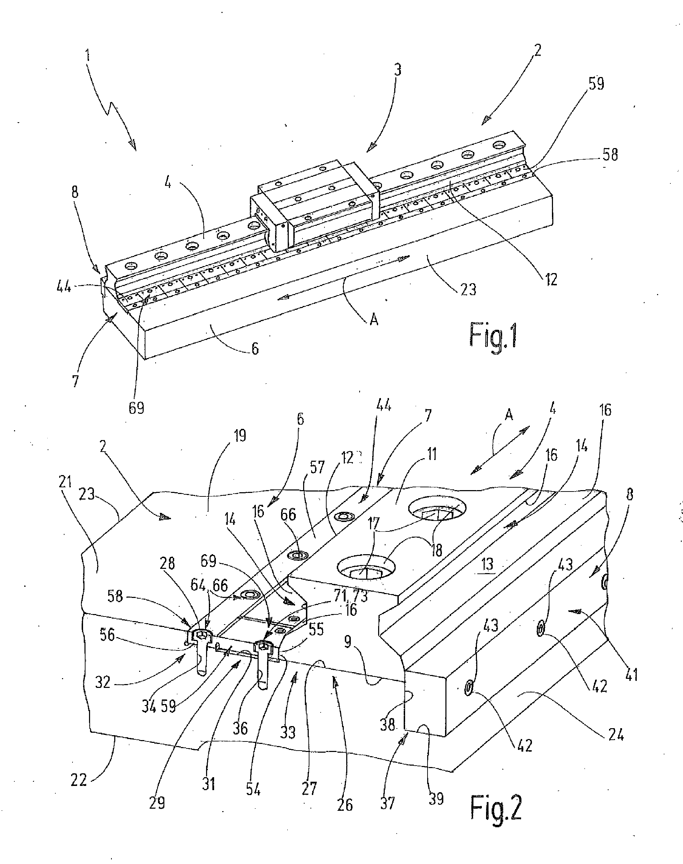

In Fig. 1 ist ein insgesamt mit 1 bezeichnetes Führungssystem veranschaulicht, das bspw. im Werkzeug- und Maschinenbau oder in der Messtechnik dazu verwendet werden kann, die Bewegung von Werkzeugmaschinen- oder Messsystemteilen präzise und störungsfrei zu führen. Hierzu weist das Führungssystem 1 eine Führungsvorrichtung 2 auf, an der ein Führungsschlitten 3 gelagert und geführt ist. Der Führungsschlitten 3 ist hier ein Führungswagen, der über Kugeln oder Rollen an der hier als lineare Profilschienenführung ausgebildeten Führungsvorrichtung gelagert ist. Die Erfindung kann jedoch auch auf andere Arten von Führungen, wie bspw. Gleitführungen oder auch Magnetführungen, angewandt werden. Die Erfindung kann sowohl für hydrodynamische als auch für hydrostatische oder aerostatische Führungen Anwendung finden.

In der hier dargestellten bevorzugten Ausführungsform eines Profilführungsschienensystems 1 weist die Führungsvorrichtung 2 eine dem Führungswagen 3 zugeordnete Führungsschiene 4, eine Anschlusskonstruktion 6, an der die Führungsschiene 4 montiert ist, eine Justagevorrichtung 7 zur Justage der Relativlage der Führungsschiene 4 und eine Arretiervorrichtung 8 auf, die dazu dient, die mittels der Justagevorrichtung 7 eingestellte Relativlage der Führungsschiene 4 zu fixieren.

Wie auch aus Fig. 2 hervorgeht, ist die Profilschiene 4 hier ein langgestreckter prismenförmiger Führungskörper (hier auch als Führungseinrichtung bezeichnet), der eine Basisfläche 9 zur Auflage und Montage an der Anschlusskonstruktion 6, eine der Basisfläche 9 gegenüberliegende, in den Figuren 1 und 2 obere Fläche 11 und zwei Seitenflächen 12, 13 aufweist, die die obere Fläche 11 mit der Basisfläche 9 verbinden. In den Seitenflächen 12, 13 sind im Wesentlichen V-förmige Führungsnuten 14 eingearbeitet, die in Längsrichtung A der Führungsvorrichtung 2 verlaufende Führungsbahnen 16 festlegen, an denen die Walzkörper des Führungswagens 3 abrollen. Es ist zu beachten, dass die hier dargestellte Form der Profilschiene nur beispielhaft ist und auch andere Profilformen, wie bspw. Flachführungskörper zur Führung mit Umgriff, Schwalbenschwanzführungskörper oder andere Prismenführungskörper, wie bspw. V-Führungskörper oder dgl., verwendet werden können.

Wie ferner aus Fig. 1 und 2 ersichtlich, ist die Profilschiene 4 an der Anschlusskonstruktion 6 mittels Schrauben 17 befestigt, die in Schraubenöffnungen 18 angeordnet sind. Es sind mehrere Schraubenöffnungen 18 im Abstand zueinander entlang der Führungsschiene 4 vorgesehen, wobei jede Schraubenöffnung 18 die Führungsschiene 4 ausgehend von der oberen Fläche 11 bis zu der Basisfläche 9 durchsetzt. An der oberen Fläche 11 sind die Schraubenöffnungen 18 angesenkt, so dass die Köpfe der Schrauben 17 vollständig darin aufgenommen werden können, um eine Bewegung des Führungswagens 3 über der oberen Fläche 11 nicht zu behindern. Die Schrauben 17 sind in mit den Schraubenöffnungen 18 fluchtende (hier nicht näher veranschaulichte) Gewindesackbohrungen in der darunter liegenden Anschlusskonstruktion 6 eingeschraubt. Es sollte beachtet werden, dass auch andere Arten einer Befestigung der Führungsschiene 4 an der Anschlusskonstruktion 6 möglich sind, wie z.B. von unten durch die Anschlusskonstruktion 6 hindurch.

Die Anschlusskonstruktion 6 dient als ein Träger für die Führungsschiene 4 und kann an einem Untergrund eines Aufstellungsraums oder an einem anderen fundament- oder maschinenfesten Träger angebracht werden. Die Anschlusskonstruktion 6 weist hier einen länglichen, im Wesentlichen kubischen Grundkörper 19 auf, der in der bevorzugten waagrechten Anordnung, wie in den Figuren 1 und 2 veranschaulicht, eine Oberseite 21, eine Unterseite 22 und zwei Schmalseiten 23, 24 aufweist, die die Oberseite 21 mit der Unterseite 22 verbinden.

In der Oberseite 21 ist eine erste Ausnehmung 26 vorgesehen, die in Längsrichtung A entlang der gesamten Anschlusskonstruktion 6 eingearbeitet ist und dazu dient, die Führungsschiene 4 und die Justagevorrichtung 7 aufzunehmen. Die erste Ausnehmung 26 ist eine im Querschnitt im Wesentlichen rechteckige Ausnehmung, die durch eine Montagefläche 27 und eine hierzu quer ausgerichtete Anlagefläche 28 definiert ist. Die Montagefläche 27 verläuft im Wesentlichen parallel zu der die Oberseite 21 definierenden Fläche, ist jedoch gegenüber dieser etwas zurückversetzt oder vertieft angeordnet. Die Anlagefläche 28 verläuft im Wesentlichen senkrecht zu der Oberseite 21 und der Montagefläche 26 im Abstand zu der in Fig. 2 rechten Schmalseite 24, an der die Arretiervorrichtung 8 angeordnet ist.

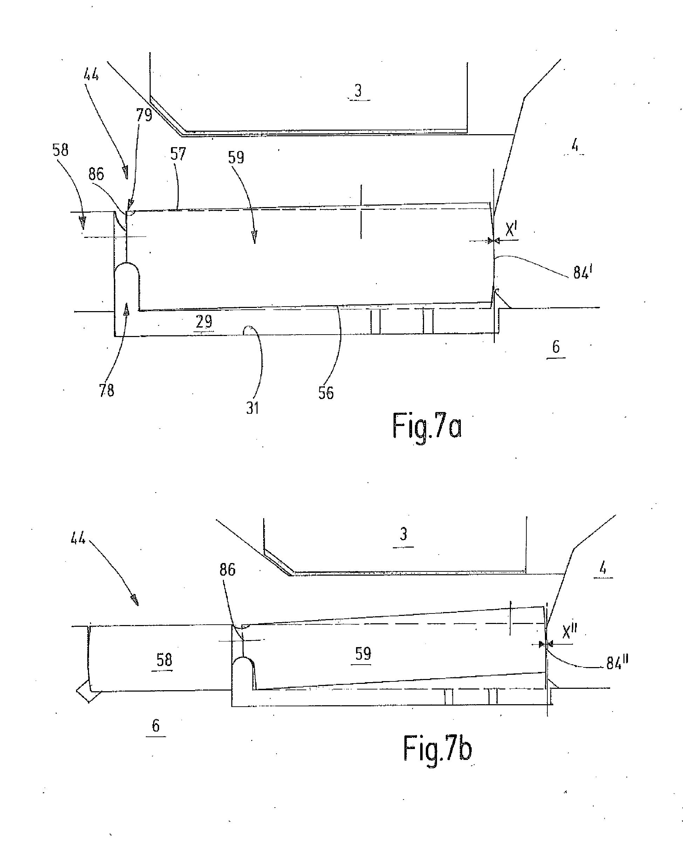

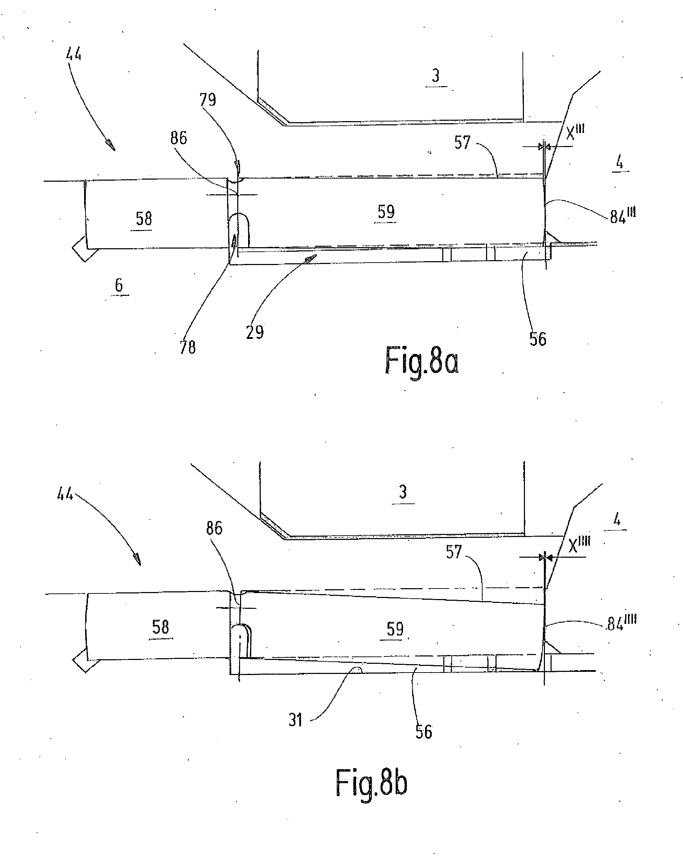

Wie ferner aus Fig. 2 aber auch aus den Figuren 7 und 8 ersichtlich, ist in der Montagefläche 27 eine Längsnut 29 eingerichtet, die in Längsrichtung A des Grundkörpers 19 im Abstand und parallel zu der Anlagefläche 28 und der Schmalseite 24 verläuft. Die Längsnut 29 weist einen Nutgrund 31 auf, der gegenüber der Montagefläche 27 nach unten zurückversetzt bzw. vertieft angeordnet ist. Somit unterteilt die Längsnut 29 die Montagefläche 27 in einen ersten Montageflächenbereich 32 und einen zweiten Montageflächenbereich 33. Der erste Montageflächenbereich 32 erstreckt sich zwischen der Anlagefläche 28 und der Längsnut 29 und dient der Montage der Justagevorrichtung 7 an diesem. Der zweite Montageflächenbereich 33 erstreckt sich zwischen der Längsnut 29 und der in Fig. 2 rechten Schmalseite 24 und dient der Montage der Führungsschiene 4 an diesem. In dem zweiten Montagebereich 33 ist die Reihe von Gewindesackbohrungen vorgesehen, die die Enden der Schrauben 17 aufnehmen, wenn die Führungsschiene 4 an der Anschlusskonstruktion 6 montiert wird.

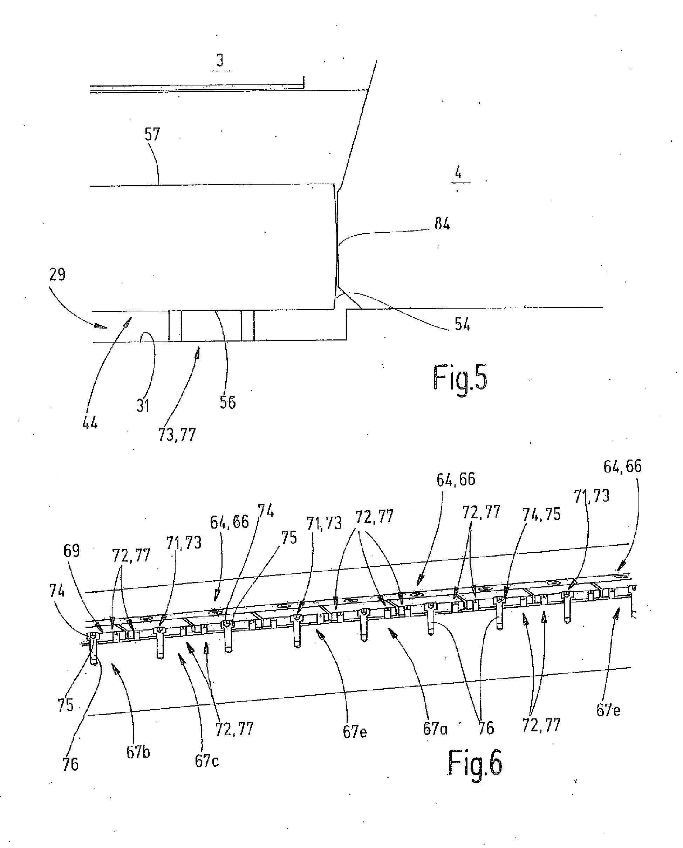

Wie ferner aus Fig. 2 aber auch aus Fig. 6 ersichtlich, sind in der Montagefläche 27 weitere Befestigungsbohrungen eingerichtet, die in regelmäßigem Abstand in Längsrichtung A entlang des Grundkörpers 19 vorgesehen sind. Hierzu gehören erste Gewindesackbohrungen 34, die regelmäßig in dem ersten Montageflächenbereich 32 senkrecht, in Richtung auf die Unterseite 22 gebohrt und mit einem Gewinde versehen sind, sowie zweite Gewindesackbohrungen 36, die regelmäßig in der Längsnut 29 in der Nähe des zweiten Montageflächenbereiches 33 senkrecht zu dem Nutgrund 31 gebohrt und ebenfalls mit einem Gewinde versehen sind.

Der Grundkörper 19 der Anschlusskonstruktion 6 weist ferner eine zweite Ausnehmung 37 auf, die wie die erste Ausnehmung zur Oberseite 21 und zur in Fig. 2 rechten Schmalseite 24 hin offen ist. Die zweite Ausnehmung 37 ist im Querschnitt rechteckig und durch eine erste Wand 38, die parallel und im Abstand zu der äußeren Fläche der Schmalseite 24 ausgehend von der Montagefläche 27 zu der Unterseite 22 hin verläuft, und eine zweite Wand 39 begrenzt, die im Wesentlichen parallel und im Abstand zu der Montagefläche 27 zwischen der ersten Wand 38 und der Außenfläche der Schmalseite 24 verläuft.

In der ersten Wand 38 sind mehrere hier nicht näher dargestellte, in Längsrichtung A in einer Linie und im Abstand zueinander angeordnete Gewindebohrungen vorgesehen, die der Befestigung der Arretiervorrichtung 8 dienen.

Die Arretiervorrichtung 8 ist hier in Form einer Klemmvorrichtung ausgebildet, die eine Klemmleiste 41 von hier bspw. rechteckigem Querschnitt aufweist, die in der zweiten Ausnehmung 37 entlang des gesamten Grundkörpers 19 aufgenommen und darin gesichert ist. Die Klemmleiste 41 weist hier eine derartige Höhe und Breite auf, dass sie, wenn sie in der zweiten Ausnehmung 37 befestigt ist, über die Montagefläche 27 der Anschlusskonstruktion 6 hinausragt und im Wesentlichen mit der Oberseite 21 bündig abschließt, während sie über die Schmalseite 24 hinausragen kann. Die Klemmleiste 41 weist auf ihrer der Schmalseite 24 zugewandten Seitenfläche eine Reihe von in Längsrichtung A gleichmäßig verteilten Befestigungsöffnungen 42 auf, die die Klemmleiste 41 durchsetzen und Befestigungsschrauben 43 aufnehmen, mit denen die Klemmleiste 41 in Anlage mit der ersten und der zweiten Wand 38, 39 an der Anschlusskonstruktion 6 gesichert werden kann. Wie bereits erwähnt, sind in der ersten Wand 38 entsprechend mehrere Gewindesackbohrungen vorgesehen, in die die Befestigungsschrauben 43 eingreifen. Wenn die Klemmleiste 41 in der in Fig. 2 dargestellten Anordnung an der Anschlusskonstruktion gesichert ist, drückt sie gegen den unteren Bereich die Seitenfläche 13 der Führungsschiene 4, um diese in ihrer relativen Lage zu fixieren, die durch die Justagevorrichtung 7 eingestellt wird.

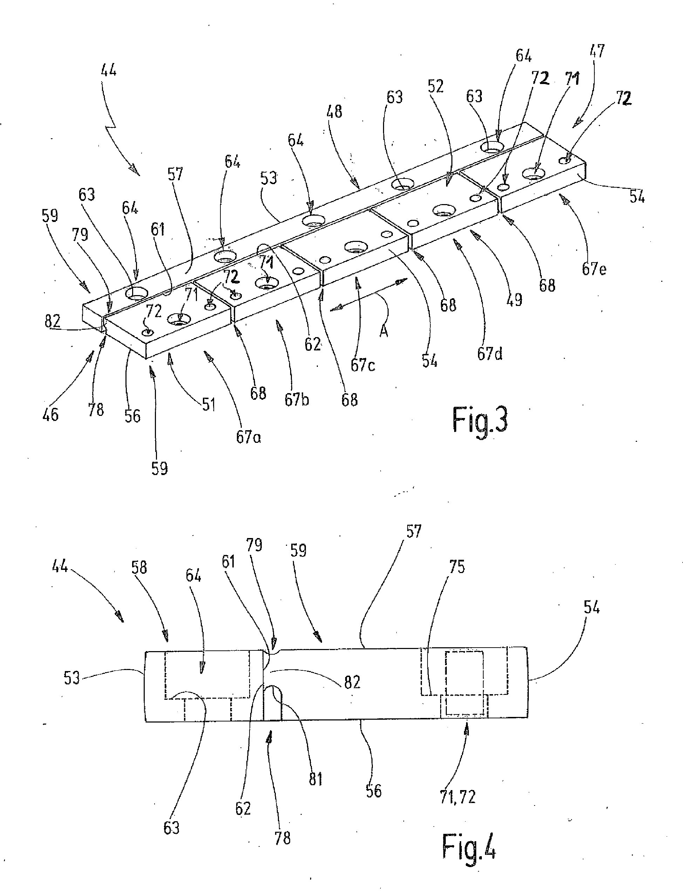

Die zur Einstellung der Relativlage der Führungsschiene 4 dienende Justagevorrichtung 7 gemäß der Erfindung weist in der hier dargestellten bevorzugten Ausführungsform eine Justageleiste 44 auf, die, wie aus den Figuren 1 und 2 hervorgeht, an der Anschlusskonstruktion 6 derart montiert ist, dass sie in der ersten Ausnehmung 26 zwischen der Anlagefläche 28 und der Führungsschiene 4 aufgenommen ist. Die Justageleiste 44 ist in den Figuren 3 und 4 gesondert in einer Perspektivansicht bzw. einer Draufsicht von vorne vereinfacht dargestellt. Die Darstellung in Fig. 4 ist gegenüber derjenigen in den Figuren 1 bis 3 vergrößert.

Die Justageleiste 44 ist eine flache Leiste, die mit Blick auf die Figuren 2-4 eine Vorderseite 46, eine Rückseite 47, Schmalseiten 48, 49, die sich im montierten Zustand in Längsrichtung A der Führungsvorrichtung 2 erstrecken, und Breitseiten 51, 52 aufweist, die die erste und die zweite Schmalseite 48, 49 miteinander verbinden und im Abstand zueinander verlaufen. Die in den Figuren 3 und 4 linke erste Schmalseite 48 bildet eine erste Anschlussfläche 53, die zur Anlage gegen die Anlagefläche 28 der Anschlusskonstruktion 6 bestimmt ist, und die der ersten Schmalseite 48 gegenüberliegende zweite Schmalseite 49 bildet eine zweite Anschlussfläche 54, die zur Anlage gegen die in Fig. 2 ersichtliche Anlagefläche 55 an der Seitenfläche 12 der Führungsschiene 4 bestimmt ist. Die in den Figuren 2-4 untere Breitseite 51 bildet eine Grundfläche 56, die der Montagefläche 27 zugeordnet ist, während die gegenüberliegende zweite Breitseite 52 eine in den Figuren obere weitere Verbindungsfläche zwischen den Anschlussflächen 53, 54 bildet.

Das Querschnittsprofil der Justageleiste 44 geht aus der Frontansicht nach Fig. 4 hervor. Wie ersichtlich, weist die Justageleiste im Querschnitt eine im Wesentlichen rechteckige Form auf, wobei die erste und die zweite Anschlussfläche 53, 54 hier ein gekrümmtes Profil aufweisen. Insbesondere sind die erste und die zweite Anschlussfläche 53, 54 ballig oder bombiert ausgebildet. Unter "ballig" bzw. "bombiert" wird hier allgemein konvex gekrümmt oder gewölbt verstanden. In der dargestellten Ausführungsform folgen die Profillinien der Anschlussflächen 53 und 54 jeweils einem Kreisbogensegment, wobei die Kreisbogensegmente hier die gleiche Krümmung aufweisen und bezüglich einer gedachten Mittelebene, die mittig zwischen der Grundfläche 56 und der oberen Fläche 57 und parallel zu diesen verläuft, symmetrisch sind. Obwohl dies hier nicht näher dargestellt ist, sind die Krümmungsradien hier jeweils größer als die Breite der Justageleiste 44 gemessen in der Breitenrichtung zwischen der ersten und der zweiten Anschlussfläche 53 und 54. Die Krümmungsmittelpunkte liegen also in etwa in der gedachten Mittelebene jeweils außerhalb der Justageleiste 44 bzw. der gegenüberliegenden Anschlussfläche. Bei der ersten Anschlussfläche 53 ermöglicht dies eine leichte Positionierung der Justageleiste 44 an der Anschlusskonstruktion 6 und eine sichere, stabile Anlage der ersten Anschlussfläche 53 an der Anlagefläche 28, selbst wenn die Letztere bezüglich ihrer Rechtwinkligkeit zur Montagefläche 27 mit geringerer Genauigkeit gefertigt wird. Bei der zweiten Anschlussfläche 54 ermöglicht deren geringe Krümmung eine relativ feine Justage der Lage der Führungsschiene 4, wie dies in größeren Einzelheiten nachstehend erläutert ist.

Wie aus den Figuren 1 bis 4 ferner ersichtlich, ist die Justageleiste 44 in einen Montageabschnitt 58, der zur Montage an der Anschlusskonstruktion 6 dient, und einen Justageabschnitt 59 unterteilt, der zur Verbindung und Justage der Führungsschiene 4 dient. Der Montageabschnitt 58 und der Justageabschnitt 59 sind in Breitenrichtung der Justageleiste 44 nebeneinander angeordnet und verlaufen in Längsrichtung A parallel zueinander von der Vorderseite 46 zu der Rückseite 47. In Breitenrichtung der Justageleiste 44 ist der Montageabschnitt 58 zwischen der ersten Anschlussfläche 53 und einem der ersten Anschlussfläche 53 gegenüberliegenden ersten Ende 61 festgelegt, das mit dem Justageabschnitt 59 verbunden ist. Genauer gesagt, ist der Justageabschnitt zwischen der zweiten Anschlussfläche 54 und einem der zweiten Anschlussfläche 54 gegenüberliegenden zweiten Ende 62 des Justageabschnitts 59 festgelegt, das mit dem ersten Ende 61 des Montageabschnitts 58 verbunden ist. In der hier dargestellten bevorzugten Ausführungsform sind der Montageabschnitt 58 und der Justageabschnitt 59 hier einstückig, integral miteinander ausgebildet. Sie können in besonders vorteilhafter Weise vorzugsweise auch einstückig im Ganzen, bspw. durch Gießen, Walzen, Umformen oder dgl. gemeinsam hergestellt werden. Als Material für die Abschnitte 58, 59 bzw. die Justageleiste 44 werden vorzugsweise Metalle oder Metalllegierungen, insbesondere Stahllegierungen verwendet, wobei bei manchen Anwendungen auch Kunststoffe zum Einsatz kommen können. Der Montageabschnitt 58 und der Justageabschnitt 59 könnten prinzipiell auch gesondert voneinander hergestellt und anschließend, bspw. durch Verschweißung oder dgl., miteinander verbunden werden.

Der Montageabschnitt 58 weist eine Reihe von mit einer Senkung oder Schulter 63 versehenen Befestigungsbohrungen 64 auf, die in Längsrichtung A der Justageleiste 44 im Abstand zueinander derart angeordnet sind, dass sie den Montageabschnitt 58 von der oberen Fläche 57 zu der Grundfläche 56 durchsetzen und im Montagezustand den ersten Gewindesackbohrungen 34 in dem ersten Montageflächenbereich 32 der Anschlusskonstruktion 6 gegenüberliegen. Dies geht insbesondere aus Fig. 2 hervor, die ferner Befestigungsschrauben 66 veranschaulicht, die durch die Befestigungsbohrungen 64 hindurchführen und in den ersten Gewindesackbohrungen 34 eingeschraubt sind, um die Justageleite 44 an der Anschlusskonstruktion 6 zu sichern.

Der Justageabschnitt 59 weist, wie insbesondere aus Fig. 3 ersichtlich, mehrere, hier fünf Teilabschnitte oder Segmente 67a, 67b, 67c, 67d, 67e auf, die in Längsrichtung A hintereinander angeordnet sind. Wie in größeren Einzelheiten nachstehend erläutert, ermöglicht die Unterteilung des Justageabschnitts 59 in mehrere Teilabschnitte 67a-e es, die Lage der zugehörigen Teilbereiche der Führungsschiene 4 individuell und unabhängig von anderen Teilbereichen zu justieren. Die Teilabschnitte 67a-e sind durch Querschlitze 68 voneinander getrennt, die ausgehend von der zweiten Anschlussfläche 54 in Quer- bzw. Breitenrichtung der Justageleiste 44 durch den Justageabschnitt 59 hindurch bis zu seinem zweiten Ende 62 bzw. bis zu dem Montageabschnitt 58 verlaufen, um die Teilabschnitte 67a-e gänzlich voneinander zu entkoppeln.

In jedem Teilabschnitt 67a-e des Justageabschnitts 59 ist eine Gruppe von Einstellöffnungen vorgesehen, die zu einer Einstelleinrichtung 69 zur Einstellung des Schwenkgrads des Justageabschnitts 59 in Bezug auf den Montageabschnitt 58 gehören. Zu der Gruppe von Einstellöffnungen gehören hier jeweils eine Senkbohrung 71 und zwei senkungsfreie Gewindebohrungen 72, die relativ nahe an der zweiten Anschlussfläche 54 in einer Linie entlang der Längsrichtung A angeordnet sind, wobei die Senkbohrung 71 zwischen den senkungsfreien Gewindebohrungen 72 eingefügt ist. Die Senkbohrung 71 und die senkungsfreien Gewindebohrungen 72 sind jeweils Durchgangsbohrungen, die ausgehend von der oberen Fläche 57 bis zu der Grundfläche 56 den Justageabschnitt 59 durchsetzen.

Die Senkbohrungen 71 sind derart verteilt angeordnet, dass sie im Montagezustand den zweiten Gewindesackbohrungen 36 in dem ersten Montageflächenbereich 33 der Anschlusskonstruktion 6 fluchtend gegenüberliegen. Somit können, wie in den Figuren 2 und 6 näher veranschaulicht, in den Senkbohrungen 71 erste Einstellschrauben 73 aufgenommen werden, deren Schraubenkopf 74 sich an einer Schulter 75 der Senkbohrung 71 abstützt und deren Schraubenende 76 in die zweite Gewindesackbohrung 36 eingreift, wie dies insbesondere in den Figuren 2 und 6 veranschaulicht ist.

In den senkungsfreien Gewindebohrungen 72 sind kopflose Gewindestifte 77 eingeschraubt, die die Gewindebohrungen 72 durchsetzen und sich am Nutgrund 31 der Längsnut 29 der Montagefläche 27 abstützen. Es ist selbstverständlich, dass sämtliche Schrauben oder Stifte 73, 77 eine passende Aufnahme, wie bspw. einen Längsschlitz, Kreuzschlitz oder vorzugsweise einen Innensechskant, für ein passenden Werkzeug, insbesondere einen Schraubenzieher oder Inbusschlüssel, an ihrem der Oberseite 49 zugewandten Ende aufweisen.

Wie ferner aus Fig. 4 ersichtlich, sind unmittelbar an dem zweiten Ende 62 des Justageabschnitts 59 eine erste und eine zweite Aussparung 78, 79 in unmittelbarer Nähe zu dem zweiten Ende des Montageabschnitts 58 vorgesehen. Die erste Aussparung 78 ist als eine Einkerbung oder Nut in der Grundfläche 56 des Justageabschnitts 59 eingerichtet, die zu der Grundfläche 56 hin offen ist und entlang der gesamten Justageleiste 44 von der Vorderseite 46 bis zu der Rückseite 47 verläuft. Die erste Aussparung 78 reicht in Dickenrichtung, gemessen zwischen der Grundfläche 56 und der oberen Fläche 57 der Justageleiste 47, in etwa bis zu der Mitte der Justageleiste 44, wo sie mit einem hier gerundeten Boden 81 endet.

Die zweite Aussparung 79 ist als eine kreissegmentförmige Nut in der oberen Fläche 57 der Justageleiste 44 derart angeordnet, dass sie zur Oberseite 51 hin offen ist und über die gesamte Länge der Justageleiste 44 von der Vorderseite 46 bis zu der Rückseite 47 verläuft. Die zweite Aussparung 79 ist der ersten Aussparung 78 in Dickenrichtung gegenüberliegend angeordnet, so dass zwischen der ersten und der zweiten Aussparung 78, 72 ein schmaler Steg 82 verbleibt, über den der Justageabschnitt 59 mit dem Montageabschnitt 58 verbunden ist. Die zweite Aussparung 79 weist eine nur geringe Tiefe auf, so dass der Steg 82 im Wesentlichen in der oberen Hälfte der Dickenerstreckung der Justageleiste 44 angeordnet ist.

Wie ferner aus den Figuren ersichtlich, ist der Montageabschnitt 58 in seiner Breite, gemessen zwischen der ersten Anschlussfläche 53 und seinem ersten Ende 61 deutlich schmäler als die Breite des Justageabschnitts 59, gemessen zwischen der zweiten Anschlussfläche 54 und dessen zweiten Ende 62. Im montierten Zustand bildet der Justageabschnitt 59 dann einen langen Hebelarm, der über den Steg 82 an dem Montageabschnitt 58 freitragend, elastisch schwenkbar aufgehängt ist. Dies wird für den nachstehend beschriebenen Justagevorgang zur Justage der Führungsschiene 4 genutzt.

Die soweit beschriebene erfindungsgemäße Führungsvorrichtung 2 wird wie folgt montiert und verwendet:

Zunächst wird wenigstens eine Justageleiste 44 an der Anschlusskonstruktion 6 befestigt, indem sie in der ersten Ausnehmung 26 auf der Montagefläche 27 platziert, durch Andrücken gegen die Anlagefläche 28 positioniert und anschließend mittels der Befestigungsschrauben 66 gesichert wird. Es können auch mehrere Justageleisten 44 in Reihe hintereinander an einer einzelnen Anschlusskonstruktion 6 befestigt werden. Die vorteilhafterweise ballige Anschlussfläche 53 als Anschlagfläche zu der Anschlusskonstruktion ermöglicht eine sichere und stabile Abstützung an der Anlagefläche 28 der Anschlusskonstruktion, selbst wenn die Letztere hinsichtlich ihrer Rechtwinkligkeit nicht sehr genau ausgeführt ist. Es können höhere Herstellungstoleranzen an der Anschlusskonstruktion toleriert werden, was den Aufwand und die damit verbundenen Kosten bei der Herstellung und Montage reduziert.

Anschließend kann wenigstens eine oder können mehrere Führungsschienen 4 an der Anschlusskonstruktion 6 vormontiert werden. Hierzu werden eine oder mehreren Führungsschienen 4 auf den zweiten Montageflächenbereich 33 aufgelegt, und die Schrauben 17 werden eingeführt und leicht angezogen.

Danach kann die wenigstens eine Klemmleiste 41 der Arretiervorrichtung 8 vormontiert werden, über die die Führungsschiene 4 gegen die Justageleiste 44 angedrückt wird. Die in diesem Verfahrensstadium vorliegende Situation, in der sich die Justageleiste 44 in ihrer Ausgangsstellung befindet, ist in Figur 5 veranschaulicht. Figur 5 zeigt eine ausschnittsweise vergrößerte Detaildarstellung unter Veranschaulichung der Schnittstelle zwischen der Justageleiste 44 und der Führungsschiene 4. Wie ersichtlich, ist bei einer angenommenen waagrechten Betriebsstellung der erfindungsgemäßen Führungsvorrichtung 2 der Justageabschnitt 59 ebenfalls waagrecht angeordnet, wobei seine Grundfläche 56 in der Ebene der Montagefläche 27 liegt. Die ballige zweite Anschlussfläche 54 stützt sich an einer Kontaktstelle 84 gegen die ihr gegenüberliegende Anlagefläche 55 der Führungsschiene 4 ab. Die Kontaktstelle 84 liegt in etwa in der Mittelebene zwischen der Grundfläche 56 und der oberen Fläche 57 des Justageleiste 44.

Ist die Führungsvorrichtung 2 in der vorstehend beschriebenen Weise vormontiert, können anschließend die geometrischen Fehler, also seitlichen Ungeradheiten oder Welligkeiten der Führungsschiene 4 über geeignete Messmittel, z.B. laseroptische Messeinrichtungen, ermittelt und die Position der geometrischen Fehler markiert werden.

Anschließend können die geometrischen Fehler mittels der erfindungsgemäßen Justagevorrichtung 7 an den markierten Positionen korrigiert werden. Dieser Fehlerkorrekturprozess soll nachstehend insbesondere unter Bezugnahme auf die Figuren 6 bis 8 erläutert werden.

Die ermittelten geometrischen Fehler werden durch Verstellen bzw. Verschwenken des Justageabschnitts 59, genauer gesagt der Justageteilabschnitte 67a-e mittels der Einstelleinrichtung 69 nach oben bzw. unten korrigiert. Im Effekt wird dadurch die wirksame Breite des Justageabschnitts 44 in dem jeweiligen Teilabschnitt verändert und die Führungsschiene 4 geeignet verlagert bzw. positioniert. Durch Einschrauben der Einstellschraube 73 der Einstelleinrichtung 69, deren Schraubenkopf 74 sich auf der Schulter 75 der Senkbohrung 71 abstützt, wird der Justageabschnitt 44 in den Figuren 6 bis 8 nach unten gedrückt und elastisch verbogen oder verschwenkt. Eine nach oben gerichtete Verstellung oder Verschwenkung des Justageabschnitts 44 wird hingegen erreicht, wenn die sich auf der Montagefläche 67 abstützenden Gewindestifte 77 weiter eingeschraubt werden. Dabei begrenzt der Schraubenkopf 73, der als Anschlag gegen die Schulter 74 einwirkt, die maximale Verstellung nach oben.

Figuren 7a und 7b zeigen den nach oben gerichteten Verstellvorgang des Justageabschnitts 59 und die dadurch bewirkte Maßveränderung der Justageleiste 44 in größeren Einzelheiten. Wie bspw. aus Figur 7a ersichtlich, wird durch Einschrauben eines Gewindestifts 77 der Justageabschnitt 44 um einen Schwenkpunkt 86 herum, hier im Gegenuhrzeigersinn gedreht. Bei dieser Verschwenkung wird Material des Justageabschnitts 44 im Bereich der unteren ersten Aussparung 78 leicht elastisch gedehnt und im Bereich der oberen zweiten Aussparung 79 etwas gestaucht, was zu einer elastischen Verbiegung des Justageabschnitts 44 führt. Der wirksame Schwenk- oder Biegepunkt 86 liegt in Höhen- oder Dickenrichtung der Justageleiste 44 in etwa in der Mitte des Stegs 82 zwischen der ersten und der zweiten Aussparung 78, 79, die die Lage des Schwenk-/Biegepunkts 86 bestimmen. Der Schwenk-/Biegepunkt 86 liegt hier deutlich oberhalb der gedachten Mittelebene zwischen der Grundfläche 56 und der oberen Fläche 57. Der Abstand dieser Soll-Schwenk-/Biegestelle 86 zu der balligen zweiten Anschlussfläche 54 und die Höhe des Stegs 82 beeinflussen den Einstellbereich bei der Lagejustage der Führungsschiene 4.

Figur 7a zeigt einen Fall, in dem der Justageabschnitt 44 in etwa um 1° im Gegenuhrzeigesinn, hier nach oben verstellt worden ist. Die Kontaktstelle 84 (vgl. Figur 5) wandert dadurch ebenfalls nach oben. Es stellt sich eine neue Kontaktstelle 84' ein, die einen größeren Abstand zu dem wirksamen Schwenkpunkt 86 hat als die Kontaktstelle 84 nach Figur 5. Dadurch wird im Ergebnis die wirksame Breite des Justageabschnitts 44 zwischen seinem zweiten Ende 62 und der Kontaktstelle 84' vergrößert. In Folge dessen wird die Führungsschiene 4 an dieser Stelle in Figur 7a nach rechts gedrückt und verlagert. Das Maß der Verlagerung oder die Maßveränderung ist in Figur 7a mit X' bezeichnet.

Ist eine größere Maßveränderung X erwünscht oder erforderlich, wird der Justageabschnitt 44 durch weiteres Einschrauben eines jeweiligen Gewindestiftes 77 noch weiter von der Montagefläche 27 weg, im Gegenuhrzeigesinn verschwenkt. Figur 7b zeigt den Fall einer Verstellung in etwa 3° nach oben. Die neue Kontaktstelle 84" hat einen noch größeren Abstand zu dem wirksamen Schwenkpunkt 86 als die Kontaktstelle 84' nach Figur 7a. Die resultierende Maßveränderung X'', um die die Führungsschiene 4 nun in Richtung nach außen, von der Anlagefläche 28 der Anschlusskonstruktion 6 weg verlagert wird, ist größer als die Maßveränderung X' nach Figur 7a.

Figuren 8a und 8b zeigen den Fall, in dem der Justageabschnitt 44 bzw. die Teilabschnitte 67a-e zu der Montagefläche 27 hin, also nach unten oder im Uhrzeigersinn gemäß den Figuren 8a und 8b, verschwenkt wird. Dies wird durch Lockern der Gewindestifte 77 und Einschrauben der Einstellschraube 73 bewerkstelligt. Wie zu ersehen, wird durch die Verschwenkung nach unten das Material des Justageabschnitts im Bereich der unteren ersten Aussparung 78 nun komprimiert, während das Material an der oberen zweiten Aussparung 79 gedehnt wird.

Figur 8a zeigt den Fall einer Verschwenkung um etwa 1°, wobei die Kontaktstelle 84 nach Figur 5 nun nach unten wandert und sich eine neue Kontaktstelle 84''' ergibt. Der Abstand zwischen dem Schwenkpunkt 86 und der neuen Kontaktstelle 86''' ist kleiner als der Abstand zwischen dem Schwenkpunkt 86 und der ursprünglichen Kontaktstelle 84 nach Figur 5, so dass es nun zu einer Maßverkürzung X''', also einer Reduktion der wirksamen Breite des Justageabschnitts 44 kommt. Dadurch kann die Führungsschiene 4 in diesem Bereich nach innen zu der Anlagefläche 28 der Anschlusskonstruktion 6 hin um das Maß X''' verlagert werden.

Figur 8b zeigt ferner den Fall, in dem der Lagerabschnitt 44 um in etwa 3° zu der Montagefläche 27 hin, nach unten verstellt worden ist, was hier in etwa dem maximalen Verstellbereich entspricht. Der maximale Verstellbereich ist durch die Tiefe der Längsnut 29 bzw. durch den Freiraum zwischen der Grundfläche 56 des Justageabschnitts 44 und dem Nutgrund 31 bestimmt. In Figur 8b stellt sich nun eine durch die neue Kontaktstelle 84'''' vorgegebene neue Maßveränderung bzw. -verkürzung X'''' ein, die betragsmäßig größer ist als die Maßreduktion X''' nach Figur 8a.

Vorteilhafterweise können nicht nur unterschiedliche Maßveränderungen X zwischen den einzelnen Justageteilabschnitten 67a-e sondern auch innerhalb dieser erreicht werden. Werden die beiden Gewindestifte 77 eines einzelnen Justageteilabschnitts 67a-e unterschiedlich angezogen, so wird dieser zusätzlich leicht in Längsrichtung A gekippt, was auf der Höhe der jeweiligen Gewindestifte 77 unterschiedliche Maßveränderungen X ergibt. Dadurch können unter Betrachtung der Justageleiste 44 von oben nahezu beliebige stetige Konturlinie entlang der zweiten Anschlussflächen 54 eingestellt werden, wodurch unterschiedliche Welligkeiten der Führungsschiene 4 bzw. Führungsbahnen 16 korrigiert werden können. Eine derartige stetige Korrektur lässt sich durch Einfügen diskreter Passoder Ausgleichselemente, wie dies herkömmlicherweise vorgenommen wird, nicht erreichen.

In der vorstehend beschriebenen Weise können alle in Seitenrichtung der Anordnung ermittelten geometrischen Fehler, wie Ungeradheiten, Welligkeiten oder Parallelitätsfehler, der Führungsschiene 4 für alle ihre Teilbereiche über die einzelnen Justageteilabschnitte 67a-e individuell korrigiert bzw. ausgeglichen werden. Ist die Führungsschiene 4 vollständig justiert, werden sämtliche Schrauben 17, 43 festgezogen, um die eingestellte Relativlage der Führungsschiene 4 zu fixieren und die Führungsschiene 4 betriebsfest zu sichern. Mit der Justagevorrichtung 7 ist eine Genauigkeit der Führung auch über lange Betriebsdauer hinweg gesichert. Ist während des Betriebs eine Nachjustage erwünscht oder erforderlich, so kann diese mit der erfindungsgemäßen Justagevorrichtung 7 in der vorstehend skizzierten Weise relativ zügig und mühelos vorgenommen werden.

Die erfindungsgemäße Justagevorrichtung 7 ermöglicht eine schnelle, aufwandsarme Justage der Linearührungsschiene 4 oder einer beliebigen sonstigen Führungseinrichtung. Dies schafft die Basis für eine präzise Führung von Bearbeitungsköpfen von Maschinenteilen, Messköpfen von Messsystemen oder dgl., was wiederum hohe Bearbeitungs- oder Messgenauigkeiten ermöglicht.

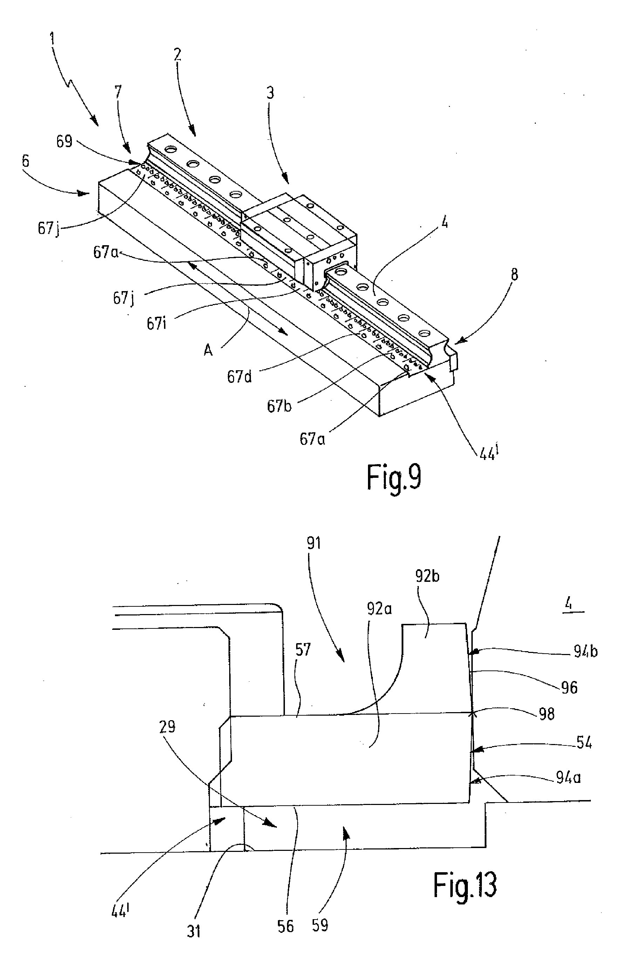

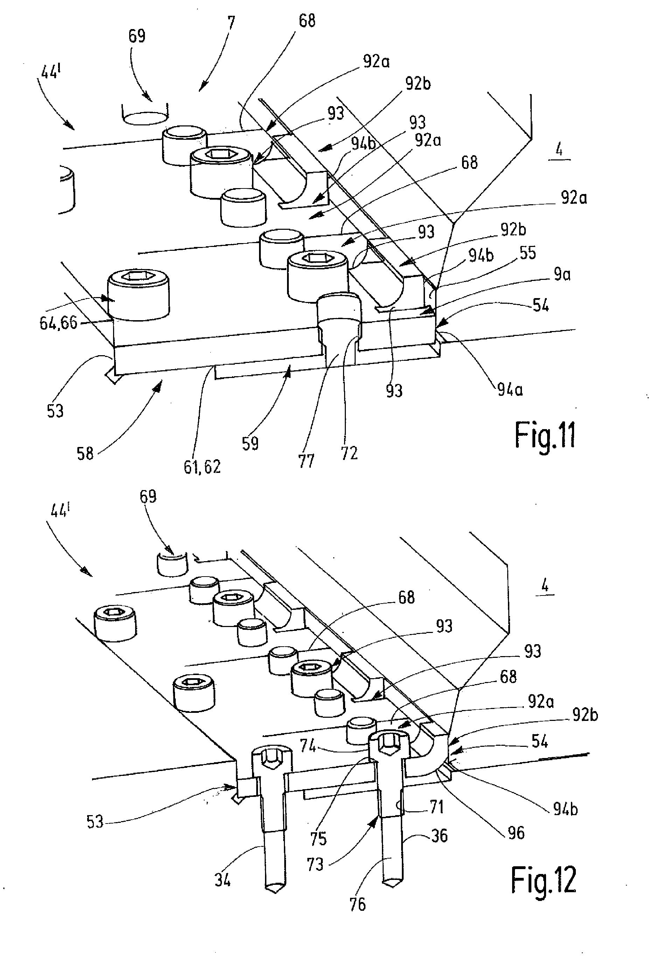

Eine modifizierte Ausführungsform der Erfindung ist in den Figuren 9 bis 14 veranschaulicht. Soweit Übereinstimmung in Bau und/oder Funktion mit der vorstehend beschriebenen Ausführungsform besteht, wird unter Zugrundelegung gleicher Bezugszeichen auf die vorstehende Beschreibung verwiesen.

In Fig. 9 ist ein Führungssystem 1 ähnlich dem Führungssystem 1 aus Fig. 1 mit der Führungsvorrichtung 2, dem auf der Führungsvorrichtung 2 gelagerten Führungsschlitten 3, der der Führungsvorrichtung 2 zugeordneten Führungsschiene 4, der Anschlusskonstruktion 6, an der die Führungsschiene 4 montiert ist, einer Justagevorrichtung 7 zur Justage der Relativlage der Führungsschiene 4 und der Arretiervorrichtung 8 in einer ähnlichen Perspektivdarstellung ähnlich Fig. 1 veranschaulicht. Diese Ausführungsform unterscheidet sich von der in den Figuren 1 bis 8 beschriebenen im Wesentlichen lediglich in der Ausbildung der Justagevorrichtung 7. Die Justagevorrichtung 7 weist hier ebenfalls eine integrale Justageleiste mit einem Montageabschnitt 58 und einem Justageabschnitt 59, die einstückig miteinander ausgebildet sind, wobei jedoch die Justageleiste hier durch eine dünne flache Leiste 44' im Wesentlichen konstanter Dicke gebildet ist, die frei von den die Sollbiegestelle definierenden Aussparungen 78, 79 ist. Die Verschwenkbarkeit des Justageabschnitts 59 in Bezug auf den Montageabschnitt 58 wird hier allein durch dessen elastische Biegbarkeit sichergestellt. Hierzu ist die Justageleiste 44' aus einem hinreichend flexiblen Material, z.B. elastischem Stahl, und mit hinreichend geringer Dicke ausgebildet, um die elastische Verbiegung des Justageabschnitts 59 in Bezug auf den Montageabschnitt 58 zu ermöglichen.

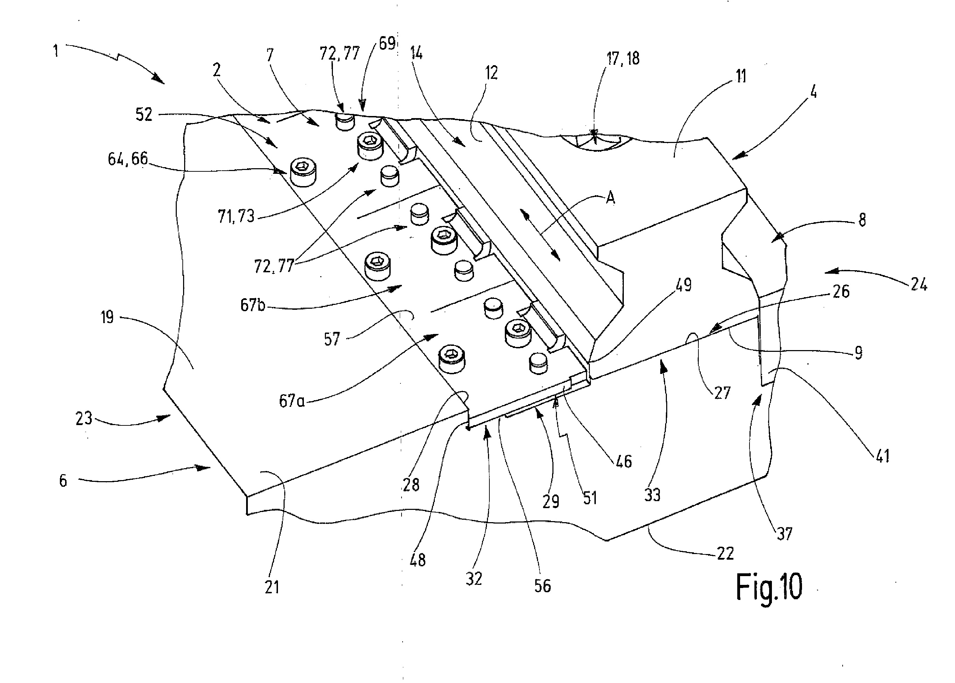

Die in Fig. 9 im Ganzen dargestellte Justageleiste 44' ist in den Figuren 10 bis 14 in größeren Einzelheiten dargestellt. Die Justageleiste 44' weist wie die Justageleiste 44 eine Vorderseite 46, eine Rückseite 47, Schmalseiten 48, 49, die sich im montierten Zustand in Längsrichtung A der Führungsvorrichtung 2 erstrecken, und Breitseiten 51, 52 auf, die die erste und die zweite Schmalseite 48, 49 miteinander verbinden und im Abstand zueinander verlaufen. Die erste Schmalseite 48 bildet die erste Anschlussfläche 53 zur Anlage gegen die Anlagefläche 28 der Anschlusskonstruktion 6, während die der ersten Schmalseite 58 gegenüberliegende zweite Seite 49 die zweite Anschlussfläche 54 aufweist, die zur Anlage gegen die Anlagefläche 55 an der Seitenfläche 12 der Führungsschiene 4 bestimmt ist. Die untere Breitseite 51 bildet die Grundfläche 56 zur Montage auf der Montagefläche 27 der Anschlusskonstruktion 6, während die gegenüberliegende zweite Breitseite 52 die obere Verbindungsfläche bildet.

Die Justageleiste 44' weist eine im Wesentlichen rechteckige Querschnittsform auf, wobei die erste und die zweite Anschlussfläche 53, 54 ein gekrümmtes Profil aufweisen, insbesondere ballig bzw. bombiert ausgebildet sind. Wie insbesondere aus Fig. 13 näher hervorgeht, folgt die Profillinie der zweiten Anschlussfläche 54 wie auch die der ersten Anschlussfläche 53 einem Kreisbogensegment, wobei die Kreisbogensegmente hier unterschiedliche Krümmungen aufweisen. Während das Kreisbogensegment der ersten Anschlussfläche 53 bezüglich einer gedachten Mittelebene, die mittig zwischen der Grundfläche 56 und der oberen Fläche 57 und parallel zu diesen verläuft, symmetrisch ist, erweitert sich das Kreisbogensegment der zweiten Anschlussfläche 54 von der Grundfläche 56 zu der oberen Fläche 57 nach außen und oben in Fig. 13. Der Krümmungsmittelpunkt der zweiten Anschlussfläche 54 liegt oberhalb der oberen Fläche 57. Die Krümmungsradien beider Anschlussflächen 53, 54 sind vorzugsweise größer als die Breite der Justageleiste 44' gemessen in der Breitenrichtung zwischen den Anschlussflächen 53, 54.

Der Montageabschnitt 58 und der Justageabschnitt 59 sind in Breitenrichtung der Justageleiste 44' nebeneinander angeordnet und verlaufen in Längsrichtung A parallel zueinander von der Vorderseite 46 zu der Rückseite 47. In Breitenrichtung der Justageleiste 44' erstreckt sich der Montageabschnitt 58 zwischen der ersten Anschlussfläche 53 und einem der ersten Anschlussfläche 53 gegenüberliegenden, gedachten ersten Ende 61, das sich im montierten Zustand im Wesentlichen auf Höhe des Übergangs von dem ersten Montageflächenbereich 32 zu der Längsnut 29 der Oberseite 21 der Anschlusskonstruktion 6 befindet. Der Justageabschnitt 59 erstreckt sich zwischen der zweiten Anschlussfläche 54 und einem der zweiten Anschlussfläche 54 gegenüberliegenden, gedachten zweiten Ende 62, das hier mit dem ersten Ende 61 des Montageabschnitts 58 zusammenfällt. Wie bereits erwähnt, sind der Montageabschnitt 58 und der Justageabschnitt 59 einstückig, integral miteinander, bspw. aus elastischem Stahl oder anderem elastischen Material, z.B. einem Metall, einer Metalllegierung oder einem Kunststoff, ausgebildet und vorzugsweise auch einstückig im Ganzen, bspw. durch Gießen, Walzen, Umformen oder dgl. hergestellt.

Der Montageabschnitt 58 weist eine Reihe von Befestigungsbohrungen 64 auf, die der Aufnahme der Befestigungsschrauben 66 dienen, um die Justageleiste 44 an der Anschlusskonstruktion 6 zu sichern.

Wie in der Ausführungsform nach Fig. 1 bis 8, weist der Justageabschnitt 59 hier ebenfalls mehrere, in der dargestellten Ausführungsform zehn Teilabschnitte 67a, 67b..., 67j auf, die in Längsrichtung A hintereinander angeordnet sind und es ermöglichen, die Lage der zugehörigen Teilbereiche der Führungsschiene 4 individuell und unabhängig von anderen Teilbereichen zu justieren. Die Teilabschnitte 67a-j sind durch Querschlitze 68 voneinander getrennt, die ausgehend von der zweiten Anschlussfläche 54 in Quer- bzw. Breitenrichtung der Justageleiste 44 durch den gesamten Justageabschnitt 59 hindurch bis zu dessen zweiten Ende 62, also bis zu dem Montageabschnitt 58 verlaufen, um die Teilabschnitte 67a-j gänzlich voneinander zu entkoppeln. In jedem Teilabschnitt 67a-j des Justageabschnitts 59 ist eine Gruppe von Einstellöffnungen zur Einstellung des Schwenkgrads des Justageabschnitts 59 in Bezug auf den Montageabschnitt 58 vorgesehen, zu der hier jeweils eine Senkbohrung 71 und zwei senkungsfreie Gewindebohrungen 72 gehören, wobei die Senkbohrung 71 zwischen den beiden senkungsfreien Gewindebohrungen 72 eingefügt ist. Die Senkbohrungen 71 nehmen mit einem Schraubenkopf 74 versehene Einstellschrauben 73 auf, während die senkungsfreien Gewindebohrungen 72 kopflose Gewindestifte 77 aufnehmen, die die Gewindebohrung 72 durchsetzen und sich am Nutgrund 71 der Längsnut 29 der Montagefläche 27 abstützen.

Wie aus den Figuren ersichtlich, ist die Breite des Justageabschnitts 59, gemessen zwischen der zweiten Anschlussfläche 54 und dessen gedachtem zweiten Ende 62, wie es auch durch das innere Ende der Querschlitze 68 definiert ist, größer als die Breite des Montageabschnitts 58, gemessen zwischen der ersten Anschlussfläche 53 und dessen erstem Ende 61, so dass der Justageabschnitt 59 einen langen Hebelarm bildet, der an dem Montageabschnitt 58 freitragend, elastisch schwenkbar aufgehängt ist, um die Justage der Führungsschiene 4 zu erleichtern.

Hinsichtlich weiterer Einzelheiten der erwähnten Merkmale der Justageleiste 44' wird, um Wiederholungen zu vermeiden, auf die obige Beschreibung im Zusammenhang mit der Justageleiste 44 nach Fig. 1 bis 8 verwiesen.

Wie ferner insbesondere aus den Figuren 10 bis 14 ersichtlich, weist der Justageabschnitt 59 in jedem Teilabschnitt 67a-j einen an die zweite Anschlussfläche 54 angrenzenden Endbereich 91 auf, der hier in drei Segmente 92a, 92b, 92a unterteilt ist, die in Längsrichtung A der Justageleiste 44' hintereinander angeordnet sind. Im vorliegenden Fall sind pro Justageteilabschnitt 67a-j jeweils zwei erste Segmente 92a vorgesehen, zwischen denen ein zweites Segment 92b eingefügt ist. Die Segmente 92a, 92b eines Justageteilabschnitts 67a-j sind durch Spalte 93 voneinander getrennt, die sich ausgehend von der zweiten Anschlussfläche 54 durch die gesamte Dicke der Justageleiste 44' und über eine kurze Strecke in Richtung auf die erste Anschlussfläche 53 erstrecken. Die Spaltlänge der Spalte 93 ist kürzer als die Entfernung zwischen der zweiten Anschlussfläche 54 und den Einstellbohrungen 71, 72, vorzugsweise in etwa halb so groß wie diese Entfernung. Durch die Spalte 93 ist der Bereich 91 in hier drei Zungen aufgespalten, die die Segmente 92a, b, a bilden. Die Segmente 92a, b können gleiche Länge in Längsrichtung A der Justageleiste 44' haben. Im vorliegenden Falle ist das zweite Segment 92b etwas länger als die dieses umgebenden ersten Segmente 92a jedes Justageteilabschnitts 97a-j.

Jedes erste Segment 92a trägt an seiner der Führungsschiene 4 zugewandten Stirnseite ein erstes Teilstück 94a der zweiten Anschlussfläche 54, und jedes zweite Segment 92b trägt ein zweites Teilstück 94b der zweiten Anschlussfläche 54. Das erste und das zweite Teilstück 94a, b weisen, wie insbesondere aus Fig. 13 hervorgeht, ein unterschiedliches Profil auf, wobei das Profil des ersten Teilstücks 94a hier zur Erzielung einer Maßverkürzung des Justageabschnitts 59 eingerichtet ist, während das Profil des zweiten Teilstücks 94b der zweiten Anschlussfläche 54 hier zur Erzielung einer Maßvergrößerung des Justageabschnitts 59 eingerichtet ist. Wie Fig. 13 zeigt, bilden die Profile beider Teilstücke 94a, 94b, zusammen, wenn sie z.B. in Draufsicht von vorne auf die Vorderseite 46 gemeinsam betrachtet werden, ein stetiges und monoton gekrümmtes zusammengesetztes Profil der zweiten Anschlussfläche 54, das einer Kreisbogenlinie folgt. Alternativ könnte das zusammengesetzte Profil auch einer Ellipsenbogenlinie oder einer anderen vorzugsweise kontinuierlichen, geeignet gekrümmten Bogenlinie folgen.

Jedes erste Segment 92a ist durch einen flachen, plattenförmigen Fortsatz der ebenen Justageleiste 44' gebildet, dessen freies Ende das erste Teilstück 94a der zweiten Anschlussfläche 54 aufweist. Jedes zweite Segment 92b ist durch einen hakenförmigen, von der Grundfläche 56 der Justageleiste 44' weg, in den Figuren nach oben gebogenen Fortsatz der Justageleiste 44' gebildet, der über die obere Fläche 57 der Justageleiste 44' hinausragt. Der umgebogene Flächenabschnitt 96 der Grundfläche 56 des zweiten Segmentes 92b bildet das zweite Teilstück 94b der zweiten Anschlussfläche 54.

Die Justageleiste 44' kann bei geringem Materialeinsatz schnell und kostengünstig hergestellt werden, indem in eine Ausgangsplatte zunächst die Querschlitze 68 eingeschnitten werden, um die Justageteilabschnitte 67a-j auszubilden, und die Spalte 93 eingearbeitet werden, um die Segmente 92a, 92b zu bilden. Danach kann das mittlere, zweite Segment 92b umgebogen werden, um den umgebogenen Flächenabschnitt 96 auszubilden, und die ersten Segmente 92a werden gekürzt, um sie mit dem zweiten Segment 92b bündig abschließen zu lassen. Zuvor oder danach können die Befestigungsbohrungen 64 und die Einstellöffnungen 71, 72 in der Justageleiste 44' geschaffen werden. Schließlich werden die erste und die zweite Anschlussfläche 53, 54 geschliffen, um diesen ihr endgültiges Profil zu verleihen. Insbesondere kann die zweite Anschlussfläche 54 im Ganzen passend geschliffen werden, um das kreisbogen- oder ellipsenbogenförmige oder in sonstiger Weise geeignet gekrümmte Gesamtprofil zu erhalten, das sich aus den beiden Profilen der beiden Teilstücke 94a und 94b zusammensetzt.

Danach kann die Justageleiste in der im Zusammenhang mit den Figuren 1 bis 8 vorstehend näher erläuterten Weise an der Anschlusskonstruktion 6 gemeinsam mit der Führungsschiene 4 und der Arretiervorrichtung 8 vormontiert werden. Sind diese Einrichtungen vormontiert, können anschließend die geometrischen Fehler, wie seitlichen Ungeradheiten oder Welligkeiten der Führungsschiene 4 bspw. laseroptisch erfasst und anschließend mittels der Justagevorrichtung 7 korrigiert werden. Hierzu werden an den zu korrigierenden Stellen die jeweiligen Segmente 94a, 94b der Justageteilabschnitte 97a-j mittels der Einstelleinrichtung 69 nach oben bzw. nach unten verstellt bzw. verschwenkt, um die effektive Breite des Justageabschnitts 59 zu verändern und die Führungsschiene 4 dadurch geeignet zu verlagern bzw. zu positionieren.

Dies kann einerseits durch Einschrauben der Einstellschrauben 73 der Einstelleinrichtung 69 erfolgen, deren Schraubenköpfe 74 sich auf der Schuler 75 der Senkbohrungen 71 abstützen, die in dem Justageabschnitt 59 im Bereich der zweiten Segmente 92b angeordnet sind. Dadurch werden die zweiten Segmente 92b des Justageabschnitts 59 nach unten gedrückt und elastisch verbogen bzw. verschwenkt, wodurch eine effektive Verbreiterung des Justageabschnitts 59 und der Justageleiste 44' insgesamt erreicht wird.

Eine nach oben gerichtete Verstellung oder Verschwenkung des Justageabschnitts 44 kann erreicht werden, indem die sich auf der Montagefläche 67 abstützenden Gewindestifte 77, die im Bereich der ersten Segmente 92a angeordnet sind, weiter eingeschraubt werden. Dadurch werden die ersten Segmente 92a nach oben gedrückt und elastisch verbogen oder verschwenkt, wodurch aufgrund des Profils der ersten Teilstücke 94a eine Verkürzung der Breite des Justageabschnitts 59 bzw. der Justageleiste 44' an dieser Stelle erzielt wird. Der Schraubenkopf 93 begrenzt als Anschlag die maximale Verstellung nach oben.

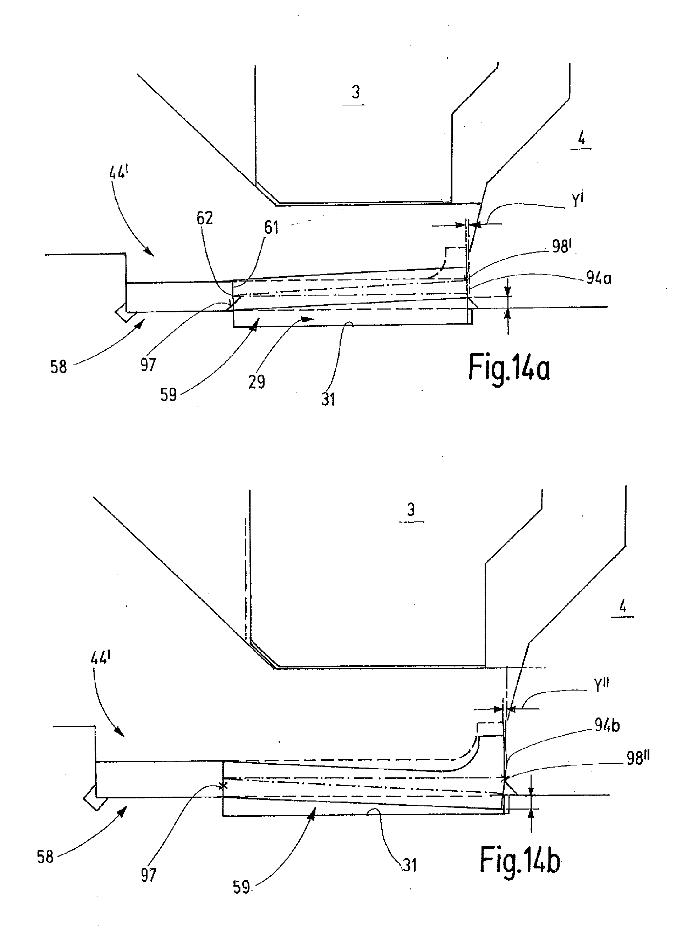

Figuren 14a und 14b veranschaulichen die Funktionsweise der erfindungsgemäßen Justagevorrichtung 7 und zeigen insbesondere den nach unten bzw. oben gerichteten Verstellvorgang des Justageabschnitts 59 und die dadurch bewirkte Maßveränderung der Justageleiste 44' in größeren Einzelheiten. Im Ausgangszustand stellt sich zwischen der Justageleiste 44' und der Führungsschiene 4 eine Kontaktstelle 98 ein, die, wie in Figur 13 gezeigt, in etwa im Bereich der oberen Kante des ersten Teilstücks 94a der zweiten Anschlussfläche 54 liegt. Nun wird bspw., wie aus Figur 14a ersichtlich, durch Einschrauben eines Gewindestifts 77 in die senkungsfreie Gewindebohrung 72 das zugehörige erste Segment 92a und der entsprechende Bereich des Justageabschnitts 59 um einen resultierenden Schwenkpunkt 97 herum, hier im Gegenuhrzeigersinn verschwenkt. Hierbei wird der Justageabschnitt 59 in diesem Bereich unter Ausbildung einer gekrümmten Biegelinie ähnlich wie bei einer Verbiegung eines einseitig eingespannten gradlinigen Balkens elastisch verformt. Der wirksame Schwenk- oder Biegepunkt 97 liegt hier etwas unterhalb der gedachten Mittelebene der Justageleiste 44' zwischen der oberen Verbindungsfläche 57 und der Grundfläche 56 in etwa an der Stelle des ersten Endes 61 des Montageabschnitts 58 (des zweiten Endes 62 des Justageabschnitts 59). Somit stellt sich anstelle der ursprünglichen Kontaktstelle 98 nun eine neue Kontaktstelle 98' ein, die weiter unten liegt. Bei dem gegebenen Schwenkpunkt 97 und dem konvex gekrümmten Profil des ersten Teilstücks 94a, das zu der Grundfläche 56 hin auch näher zu der ersten Anschlussfläche 53 hin verläuft, ist der Abstand zwischen der neuen Kontaktstelle 98' und dem Schwenkpunkt 97 kleiner als bei der Kontaktstelle 98 nach Figur 13. Dadurch wird im Ergebnis die wirksame Breite des Justageabschnitts 59 verkleinert, so dass infolgedessen die Führungsschiene 4 an dieser Stelle in Figur 14a nach links gedrückt bzw. verlagert wird. Das Maß der Verlagerung oder der Maßverkürzung ist in Figur 14a mit Y' bezeichnet.

Ist eine größere Maßveränderung Y' erwünscht oder erforderlich, wird das jeweilige erste Segment 92a durch weiteres Einschrauben des zugehörigen Gewindestiftes 77 noch weiter von der Montagefläche 27 weg, im Gegenuhrzeigersinn verschwenkt, um die Kontaktstelle 98' noch weiter in Richtung auf die Grundfläche 56 zu verlagern und dadurch die effektive Breite des Justageabschnitts 59 weiter zu verringern.

Figur 14b zeigt den Fall, in dem der Justageabschnitt 59 bzw. der jeweilige Teilabschnitt 67a-j zu der Montagefläche 27 hin, also nach unten oder im Uhrzeigersinn gemäß Figur 14b, verschwenkt wird. Dies wird durch Lockern der Gewindestifte 77 und Einschrauben der entsprechenden Einstellschraube 73 bewerkstelligt. Dadurch wird das zugehörige zweite Segment 92b nach unten verschwenkt bzw. verbogen. Dabei wandert die Kontaktstelle 98 nach Figur 13 nun entlang des umgebogenen Flächenabschnitts 96 der Grundfläche 56, die das zweite Teilstück 94b der zweiten Anschlussfläche 54 bildet, nach oben, und es stellt sich eine neue Kontaktstelle 98" ein. Der Abstand zwischen dem wirksamen Schwenkpunkt 97 und der neuen Kontaktstelle 98" ist größer als zuvor, so dass es nun zu einer Maßvergrößerung Y'', also einer Vergrößerung der wirksamen Breite des Justageabschnitts 59 in diesem Bereich kommt. Dadurch kann die Führungsschiene 4 in diesem Bereich nach außen, von der Anlagefläche 28 der Anschlusskonstruktion 6 weg in Richtung auf die Schmalseite 24 der Anschlusskonstruktion um das Maß Y" verlagert werden. Durch weiteres Einschrauben des Gewindestiftes 77 kann die Maßvergrößerung Y'' noch weiter vergrößert werden.

Wie bei der Ausführungsform gemäß den Figuren 1 bis 8 können auch bei der Ausführungsform gemäß den Figuren 9 bis 14 unterschiedliche Maßveränderungen auch innerhalb der einzelnen Justageteilabschnitte 37a-j erreicht werden, indem die Gewindestifte 77 und Einstellschrauben 73 der einzelnen Justageteilabschnitte unterschiedlich angezogen werden. Es können so beliebige stetige Konturlinien entlang der zweiten Anschlussflächen 54 eingestellt werden, um unterschiedliche Welligkeiten der Führungsschiene 4 bzw. Führungsbahnen 16 zu korrigieren. Sind sämtliche Ungeradheiten, Welligkeiten oder Parallelitätsfehler der Führungsschiene 4 für alle ihre Teilbereiche über die einzelnen Justageteilabschnitte 67a-j in der dargestellten Weise individuelle korrigiert bzw. ausgeglichen worden, können sämtliche Schrauben 17, 43 angezogen werden, um die eingestellte Relativlage der Führungsschiene 4 zu fixieren und die Führungsschiene 4 betriebsfest zu sichern. Der Justagevorgang kann zügig und mühelos vorgenommen und während des Betrieb zur Nachjustage jederzeit wiederholt werden.

Im Rahmen der Erfindung sind noch zahlreiche weitere Modifikationen der vorstehend beschriebenen Ausführungsformen möglich. Die Justageleiste 44 kann bspw. je nach Anforderungen der jeweiligen Anwendung und Randbedingungen bzw. Beschränkungen, die durch die Anschlusskonstruktion, die Herstellung oder den Transport bestimmt sein können, in beliebigen Längen geschaffen werden. Die Justageleiste 44 kann eine beliebige Anzahl von Justageteilabschnitten 67, wie bspw. nur einen einzigen Justageabschnitt oder auch mehr als die fünf dargestellten Justageteilabschnitte 67a-e, aufweisen. Prinzipiell sind auch andere Befestigungsmöglichkeiten der Justageleiste 44 an der Anschlusskonstruktion 6 oder einem sonstigen Träger, z.B. durch Verschweißen, Klemmen oder dgl., möglich. Im Allgemeinen wird aber die lösbare Schraubbefestigung der Justageleiste bevorzugt. Während die Einstelleinrichtung 69 in jedem Justageteilabschnitt 67a-e hier die Gruppe von Einstellschrauben mit der Kopfschraube 72 und den beiden Gewindestiften 77 aufweist, kann die Anzahl und/oder Anordnung der Einstellschrauben auch variiert werden. Wie bereits erwähnt, können der Montageabschnitt 58 und der Justageabschnitt 59 der Justagevorrichtung 7 auch gesondert voneinander hergestellt und geeignet zusammengefügt sein. Prinzipiell wäre es auch möglich, den Montageabschnitt und den Justageabschnitt 59 über ein Schwenkgelenk miteinander zu koppeln. Die einfache Form der einstückigen Justageleiste 44 mit wenigstens einer die Soll-Biegestelle vorgebenden Aussparung 78, 79 oder als Flache Leiste reduzierter Dicke ohne die Aussparung 78, 79 wird jedoch bevorzugt. Obwohl in der Ausführungsform mit der bzw. den Aussparungen 78 oder 79 generell lediglich eine einzige Aussparung 78 oder 79 entweder in der Grundfläche 56 oder in der oberen Fläche 57 der Justageleiste 44 genügt, sind die beiden Aussparungen 78 und 79 zur Unterstützung der erforderlichen Materialstauchung und -dehnung von Vorteil, um eine Beschädigung zu vermeiden und eine lange Nutzungsdauer der Justagevorrichtung 7 zu fördern. Die Höhe und Lage des den Montageabschnitt 58 mit dem Justageabschnitt 59 verbindenden Stegs 82 kann je nach Anforderung verändert werden, um den Schwenkpunkt 86 und die resultierende Maßveränderung X vorzugeben. Außerdem kann auch die Krümmung der zweiten Anschlussfläche 54 vergrößert oder verkleinert werden, um größere Maßveränderungen bei geringerem Feinheitsgrad der Einstellung oder umgekehrt zu ermöglichen. Es sind prinzipiell beliebige konvex krummlinige Profile für die zweite Anschlussfläche 54 möglich. Darüber hinaus ist die Erfindung zwar in Bezug auf die bevorzugte Anwendung beschrieben worden, bei der der durch die Justagevorrichtung 7 justierte Führungskörper des Führungssystems 1 die Führungsschiene 4 selbst ist. Die Justagevorrichtung 7 kann aber auch auf andere Führungskörper, wie z.B. auf eine längliche Zahnstange eines Ritzel-Zahnstangenantriebs oder dgl., angewandt werden, um diese genau parallel bspw. zu einer Führungsschiene auszurichten.

Es ist eine Führungsvorrichtung, insbesondere für Werkzeugmaschinen, geschaffen, die eine an einer Anschlusskonstruktion 6 montierte Führungsschiene 4 und eine Justagevorrichtung 7 aufweist, die zur Einstellung des Verlaufs, insbesondere der Geradheit oder Parallelität, der Führungsschiene 4 eingerichtet ist. Die Justagevorrichtung 7 weist in einer Ausführungsform der Erfindung eine Justageleiste 44, 44' mit einem Montageabschnitt 58 zur Montage an der Anschlusskonstruktion 6 und einem Justageabschnitt 59 zur Justage der Führungsschiene 4 auf, wobei der Justageabschnitt 59 schwenk- oder biegbar mit dem Montageabschnitt 58 verbunden ist und eine mit der Führungsschiene 4 in Anlage stehende Justagefläche 54 aufweist, die ein konvex gekrümmtes Profil aufweist. Eine Einstelleinrichtung 69 dient dazu, den Justageabschnitt 59 in Bezug auf den Montageabschnitt 58 um einen gewünschten Schwenk- bzw. Biegegrad zu verschwenken bzw. zu verbiegen, um eine Breitenmaßveränderung der Justageleiste 44, 44' zur lokalen Verlagerung der Führungsschiene 4 zu erreichen. Damit lassen sich lokale geometrische Fehler der Geradlinigkeit oder Parallelität der Führungsschiene 4 kompensieren.

## Patentansprüche

1. Justagevorrichtung für eine Führungseinrichtung (4) für eine Bewegung eines bewegbaren Teils, insbesondere für eine Linearführungseinrichtung für Werkzeugmaschinen,
mit einem Montageabschnitt (58) zur Montage an einer Anschlusskonstruktion (6) und einem Justageabschnitt (59) zur Verbindung mit der Führungseinrichtung (4), wobei der Montageabschnitt (58) und der Justageabschnitt (59) in Längsrichtung (A) der Justagevorrichtung (7) verlaufen und quer zu der Längsrichtung (A) nebeneinander angeordnet sind;
wobei der Montageabschnitt (58) eine erste Anschlussfläche (53) zur Anlage gegen eine Anlagefläche (28) der Anschlusskonstruktion (6) aufweist;
wobei der Justageabschnitt (59) mit dem Montageabschnitt (58) schwenkbar verbunden ist, und eine zu der ersten Anschlussfläche (53) entgegengesetzt gerichtete zweite Anschlussfläche (54) aufweist, die zur Anlage gegen eine Anlagefläche (55) der Führungseinrichtung (4) bestimmt ist und ein gekrümmtes Profil aufweist.

2. Justagevorrichtung nach Anspruch 1, **dadurch gekennzeichnet, dass** die erste Anschlussfläche (53) ein nach außen gekrümmtes Profil aufweist.

3. Justagevorrichtung nach Anspruch 1 oder 2, **dadurch gekennzeichnet, dass** der Montageabschnitt (58) eine zu der ersten Anschlussfläche (53) im Wesentlichen quer ausgerichtete Grundfläche (56), die als Montagefläche zur Montage an der Anschlusskonstruktion (6) eingerichtet ist, und vorzugsweise eine oder mehrere in Reihe angeordnete Befestigungsbohrungen (64) aufweist.

4. Justagevorrichtung nach einem der Ansprüche 1 bis 3, **dadurch gekennzeichnet, dass** der Justageabschnitt (59) mit dem Montageabschnitt (58) integral ausgebildet und vorzugsweise in einem Stück mit diesem gemeinsam gefertigt ist.

5. Justagevorrichtung nach Anspruch 4, **dadurch gekennzeichnet, dass** sie eine Justageleiste (44, 44') mit der ersten und der zweiten Anschlussfläche (53, 54), die Schmalseiten der Justageleiste (44, 44') bilden, einer Grundfläche (56), die eine zwischen der ersten und der zweiten Anschlussfläche (53, 54) verlaufende Breitseite bildet, und einer weiteren Verbindungsfläche (57) aufweist, die die erste mit der zweiten Anschlussfläche (53, 54) verbindet und in Dickenrichtung im Abstand und im Wesentlichen parallel zu der Grundfläche (56) verläuft.

6. Justagevorrichtung nach Anspruch 5, **dadurch gekennzeichnet, dass** der Justageabschnitt (59) elastisch biegbar mit dem Montageabschnitt (58) verbunden ist.

7. Justagevorrichtung nach Anspruch 5 oder 6, **dadurch gekennzeichnet, dass** an der Verbindungsstelle zwischen dem Montageabschnitt (58) und dem Justageabschnitt (59) eine Aussparung (78, 79) vorgesehen ist, die sich ausgehend von einer von der Grundfläche (56) und der weiteren Verbindungsfläche (57) in Dickenrichtung auf die andere von der Grundfläche (56) und der weiteren Verbindungsfläche (57) zu erstreckt und in Längsrichtung (A) entlang der gesamten Justageleiste (44) verläuft, wobei die Aussparung (78) vorzugsweise eine Tiefe aufweist, die wenigstens ein Drittel der Dicke der Justageleiste (44), gemessen in Dickenrichtung zwischen der Grundfläche (56) und der weiteren Verbindungsfläche (57), mehr bevorzugt in etwa die Hälfte der Dicke der Justageleiste (44) oder mehr, beträgt.

8. Justagevorrichtung nach Anspruch 7, **dadurch gekennzeichnet, dass** an der Grundfläche (56) eine erste Aussparung (78) vorgesehen ist und an der weiteren Verbindungsfläche (57) eine zweite Aussparung (79) vorgesehen ist, die in Dickenrichtung der ersten Aussparung (78) gegenüberliegt, wobei die erste und die zweite Aussparung (78, 79) unterschiedliche Tiefen haben.

9. Justagevorrichtung nach Anspruch 5 oder 6, **dadurch gekennzeichnet, dass** die Justageleiste (44, 44') durch eine dünne flache Leiste (44') konstanter Dicke gebildet ist, deren an die zweite Anschlussfläche (54) angrenzender Endbereich (91) in wenigstens ein erstes Segment (92a) und ein zweites Segment (92b) unterteilt ist, die in Längsrichtung der Leiste (44') hintereinander angeordnet sind und ein erstes bzw. zweites Teilstück (94a, 94b) der zweiten Anschlussfläche (54) aufweisen, wobei das erste Teilstück (94a) der zweiten Anschlussfläche (54) an dem ersten Segment (92a) ein anderes gekrümmtes Profil aufweist als das zweite Teilstück (94b) der zweiten Anschlussfläche (54) an dem zweiten Segment (92b).

10. Justagevorrichtung nach Anspruch 9, **dadurch gekennzeichnet, dass** das erste Segment (92a) durch einen flachen, plattenförmigen Fortsatz der Leiste (44') gebildet ist, dessen freies Ende das erste Teilstück (94a) der zweiten Anschlussfläche (54) aufweist, das zweite Segment (92b) durch einen hakenförmigen, von einer Grundfläche (56) der Leiste (44') weg gebogenen Fortsatz Leiste (44') gebildet ist, dessen mit der Grundfläche (56) verbundener, umgebogener Flächenabschnitt (96) das zweite Teilstück (94b) der zweiten Anschlussfläche (54) aufweist, und das erste Segment (92a) von dem zweiten Segment (92b) durch einen Spalt (93) getrennt ist, der sich ausgehend von der zweiten Anschlussfläche (54) senkrecht zur Längsrichtung (A) der Leiste (44') über im Wesentlichen die Erstreckung des hakenförmigen Fortsatzes hinweg erstreckt.

11. Justagevorrichtung nach einem der vorhergehenden Ansprüche, **dadurch gekennzeichnet, dass** die Breite des Justageabschnitts (59), gemessen zwischen einer Verbindungsstelle (61, 62) des Justageabschnitts (59) mit dem Montageabschnitt (58) und der zweiten Anschlussfläche (54), größer als die Breite des Montageabschnitts (58), gemessen zwischen der ersten Anschlussfläche (53) und der Verbindungsstelle (61, 62), ist, vorzugsweise wenigstens in etwa der doppelten Breite des Montageabschnitts (58) entspricht.

12. Justagevorrichtung nach einem der vorhergehenden Ansprüche, **dadurch gekennzeichnet, dass** die zweite Anschlussfläche (54) ein Kreisbogensegment umschreibt, dessen Krümmungsradius vorzugsweise größer als die Breite des Justageabschnitts (59) ist, mehr bevorzugt größer als die Breite der Justageleiste (44, 44') ist.

13. Justagevorrichtung nach einem der vorhergehenden Ansprüche, **dadurch gekennzeichnet, dass** der Justageabschnitt (59) eine Einstelleinrichtung (69) zur Einstellung des Schwenkgrads des Justageabschnitts (59) in Bezug auf den Montageabschnitt (58) aufweist, zu der in dem Justageabschnitt (59) vorgesehene Einstellöffnungen (71, 72) zur Aufnahme von Einstellschraubenbolzen (73, 77) gehören.

14. Justagevorrichtung nach Anspruch 11, **dadurch gekennzeichnet, dass** der Justageabschnitt (59) mehrere Teilabschnitte (67a-c) aufweist, die in Längsrichtung (A) hintereinander angeordnet und durch Querschlitze (68) voneinander getrennt sind, die ausgehend von der zweiten Anschlussfläche (54) bis zu dem Montageabschnitt (58) verlaufen, wobei jeder Teilabschnitt (67a-c) eine Gruppe von Einstellöffnungen (71, 72) mit und ohne Senkung aufweist.

15. Führungsvorrichtung, insbesondere für Werkzeugmaschinen,
mit einer Anschlusskonstruktion (6), die eine erste Ausnehmung (26) aufweist, die durch eine Montagefläche (27) und eine hierzu quer ausgerichtete Anlagefläche (28) definiert ist;
mit einem Führungskörper (4), der eine Führungsbahn (16) zur Führung einer Bewegung eines bewegbaren Teils definiert, wobei der Führungskörper (4) eine Basisfläche (9), die an der Montagefläche (27) der Anschlusskonstruktion (6) montiert ist, und eine hierzu quer ausgerichtete Anlagefläche (55) aufweist;
mit einer Justagevorrichtung (7) zur Einstellung der Lage des Führungskörpers (4) nach einem der vorhergehenden Ansprüche, wobei die Justagevorrichtung (7) an der Montagefläche (27) der Anschlusskonstruktion (6) derart montiert ist, dass ihre erste Anschlussfläche (53) an der Anlagefläche (28) der Anschlusskonstruktion (6) anliegt und ihre zweite Anschlussfläche (54) mit der Anlagefläche (55) des Führungskörpers (4) in Anlage steht; und
mit einer Arretiervorrichtung (8) zum Feststellen der einstellbaren Relativlage des Führungskörpers (4).
